# EUROPÄISCHE PATENTSCHRIFT

(11) **EP 1 278 258 B1**
(45) Veröffentlichungstag und Bekanntmachung des Hinweises auf die Patenterteilung: **14.04.2010**
(21) Anmeldenummer: 02008287.1
(22) Anmeldetag: 23.04.2002
(51) Int. Cl.: H01M 8/02, H01M 8/12, H01M 8/24

(54) **Brennstoffzelleneinheit und Brennstoffzellenblockverbund**
Fuel cell unit and fuel cell stack assembly
Unité de pile à combustible et assemblage d'un empilage de piles à combustible

(30) Priorität: 19.07.2001 DE 10135334
(43) Veröffentlichungstag der Anmeldung: 22.01.2003
(73) Patentinhaber: ElringKlinger AG, 72581 Dettingen (DE)
(72) Erfinder: Diez, Armin, 73252 Lenningen (DE)
(74) Vertreter: Hoeger, Stellrecht & Partner Patentanwälte

(56) Entgegenhaltungen:
- EP-A- 0 437 175
- WO-A-98/35398
- DE-A1- 19 821 767
- US-A- 5 795 665

## Beschreibung

Die vorliegende Erfindung betrifft eine Brennstoffzelleneinheit, welche ein Gehäuse umfaßt, das mindestens einen Gasraum begrenzt und eine Gasdurchgangsöffnung in einer ersten Gehäusewand und eine Gasdurchgangsöffnung in einer der ersten Gehäusewand gegenüberliegenden zweiten Gehäusewand aufweist.

Solche Brennstoffzelleneinheiten sind aus dem Stand der Technik bekannt.

In der Regel werden mehrere solcher Brennstoffzelleneinheiten zu einem Brennstoffzellenblockverbund zusammengefaßt, in welchem die Brennstoffzelleneinheiten längs einer Stapelrichtung aufeinanderfolgen.

In einer Kathoden-Anoden-Elektrolyt-Einheit einer solchen Brennstoffzelleneinheit läuft im Betrieb derselben eine elektrochemische Reaktion ab, in deren Verlauf an der Anode der KAE-Einheit Elektronen freigesetzt werden und diese der Kathode der KAE-Einheit zur Ionisierung von Sauerstoffatomen über einen äußeren Stromkreis zugeführt werden. Zwischen den KAE-Einheiten zweier aufeinanderfolgender Brennstoffzelleneinheiten angeordnete Kontaktplatten dienen dem Ladungsausgleich zwischen der Kathode der einen Brennstoffzelleneinheit und der Anode der benachbarten Brennstoffzelleneinheit, um der Kathode die zur Ionisierung benötigten Elektronen zuzuführen. Von den randständigen Kontaktplatten des Brennstoffzellenblockverbunds können elektrische Ladungen abgegriffen werden, um sie einem externen Nutz-Stromkreislauf zuzuführen.

Um den von dem Gehäuse begrenzten Gasraum, beispielsweise einen Brenngasraum der Brennstoffzelleneinheit, gegenüber einem weiteren Gasraum, beispielsweise einem an das Gehäuse angrenzenden Oxidationsmittelraum, gasdicht abzudichten, ist es erforderlich, an dem Gehäuse im Bereich der Gasdurchgangsöffnungen Dichtelemente, beispielsweise Flachdichtungen, vorzusehen.

Damit die Flachdichtungen eine ausreichende Dichtwirkung entfalten können, müssen sie mit einer ausreichenden Dichtflächenpressung beaufschlagt werden. Diese Dichtflächenpressung wird beispielsweise mittels einer Spanneinrichtung erzeugt, welche die an das Gehäuse angrenzenden Flachdichtungen gegen die Gehäusewände verspannt.

Werden mehrere Brennstoffzelleneinheiten zu einem Brennstoffzellenblockverbund zusammengefaßt, so kann eine Spanneinrichtung vorgesehen sein, mit welcher die die Gasdurchgangsöffnungen aufweisenden Bereiche der Gehäuse der Brennstoffzelleneinheiten gegeneinander verspannt werden.

Die für die Dichtheit der Flachdichtungen erforderliche Dichtflächenpressung muß von dem Gehäuse der Brennstoffzelleneinheit möglichst deformationsfrei aufgenommen werden. Dies gestaltet sich insbesondere dann schwierig, wenn die Brennstoffzelleneinheit bei einer hohen Temperatur betrieben wird, bei welcher das Material der Gehäusewände nur noch eine geringe Festigkeit aufweist. So werden beispielsweise sogenannte Hochtemperatur-Brennstoffzelleneinheiten, die ohne externen Reformer direkt mit einem kohlenwasserstoffhaltigen Brenngas wie beispielsweise Methan oder Erdgas oder, alternativ hierzu, unter Verwendung eines externen Reformers, mit einem kohlenwasserstoffhaltigen Brenngas, wie beispielsweise Methan, Erdgas, Diesel- oder Benzinkraftstoff, betrieben werden können, bei Temperaturen im Bereich von ungefähr 800°C bis ungefähr 1000°C betrieben. Bei diesen Temperaturen fällt die Streckgrenze von Stahl auf Werte unterhalb von 10 N/mm² ab, was weit unterhalb der für eine Flachdichtung erforderlichen Dichtflächenpressung liegt, so dass ein aus Stahl gefertigtes Gehäuse bei diesen Temperaturen unter der von der Spanneinrichtung ausgeübten Spannkraft zusammengedrückt werden würde.

Die US-A-5 795 665 offenbart eine Brennstoffzelleneinheit mit den Merkmalen des Oberbegriffs von Anspruch 1.

Die WO 98/35398 A offenbart eine Brennstoffzelleneinheit mit einem zwischen einer großen Trennplatte und einer kleinen Trennplatte angeordneten Stützring aus porösem Sintermaterial oder aus massivem Metall, in das zur Strömungsführung radiale Nuten eingearbeitet sind.

Die EP 0 437 175 A1 offenbart eine Brennstoffzelleneinheit mit einem zwischen Dichtungsringen angeordneten Rohrstück, das Durchtrittsöffnungen für das Brenngas aufweist.

Die DE 198 21 767 A1 offenbart eine Brennstoffzelleneinheit mit Stützringen, die zwischen einer Membran und einem Kollektorblech oder zwischen zwei Kollektorblechen angeordnet sein können.

Der vorliegenden Erfindung liegt daher die Aufgabe zugrunde, eine Brennstoffzelleneinheit der eingangs genannten Art zu schaffen, deren Gehäuse auch bei hohen Temperaturen eine ausreichende Deformationsstabilität gegenüber der für eine Flachdichtung erforderlichen Dichtflächenpressung aufweist.

Diese Aufgabe wird durch eine Brennstoffzelleneinheit nach Anspruch 1 gelöst.

Der erfindungsgemäßen Lösung liegt somit das Konzept zugrunde, eine Verformung der einander gegenüberliegenden Gehäusewände aufgrund der Dichtflächenpressung, mit welcher das Gehäuse beaufschlagt wird, dadurch zu verhindern, dass die einander gegenüberliegenden Gehäusewände durch ein im Innern des Gehäuses angeordnetes Abstützelement verhindert wird, welches die Dichtflächenpressung, mit welcher das Gehäuse beaufschlagt wird, aufnimmt und als Distanzhalter dient, welcher ein Zusammendrücken des Gehäuses verhindert, so daß eine für eine ausreichende Abdichtwirkung der Flachdichtungen erforderliche Dichtkraft eingeleitet werden kann.

Aufgrund der durch das mindestens eine Abstützelement erhöhten Deformationsstabilität des Gehäuses kommt es auf die dem Material der Gehäusewände inhärente Deformationsstabilität nicht mehr an, so daß als Material der Gehäusewände auch ein Material verwendet werden kann, welches bei den hohen Betriebstemperaturen einer Hochtemperatur-Brennstoffzelleneinheit leicht verformbar ist, aus dem aber die Bestandteile des Gehäuses besonders einfach herstellbar sind, wie beispielsweise Stahl, insbesondere Edelstahl.

Insbesondere erlaubt es der erfindungsgemäße Aufbau der Brennstoffzelleneinheit, das Gehäuse der Brennstoffzelleneinheit aus Blechformteilen zu bilden, welche durch einen oder mehrere Umformvorgänge, beispielsweise durch Prägen und/oder Tiefziehen, aus einem Metallblech, insbesondere aus einem hochtemperaturbeständigen Edelstahlblech oder einem mit einem anorganischen oder keramischen Material beschichteten Stahlblech, hergestellt werden.

Die Stärke des verwendeten Blechmaterials beträgt vorzugsweise höchstens ungefähr 3 mm, insbesondere höchstens ungefähr 1 mm.

Bei einer bevorzugten Ausgestaltung der Erfindung ist vorgesehen, daß das Abstützelement ringförmig geschlossen ausgebildet ist und mit Gasdurchtrittsöffnungen versehen ist, um einen Gastransport von den Gasdurchgangsöffnungen in den Gehäusewänden zu einem durch das Abstützelement von den Gasdurchgangsöffnungen abgetrennten Bereich des Innenraums des Gehäuses und/oder einen Gastransport aus dem genannten Bereich des Innenraums des Gehäuses zu den Gasdurchgangsöffnungen zu ermöglichen.

Um den Gasdurchtritt zwischen einem Innenraum des Abstützelements und einem Außenraum des Abstützelements zu ermöglichen, kann das Abstützelement mindestens zwei Kanalbegrenzungselemente umfassen, zwischen denen ein Gasdurchtrittskanal ausgebildet ist.

Ferner kann ein Trägerelement vorgesehen sein, an dem die Kanalbegrenzungselemente im montierten Zustand des Abstützelements anliegen und das den Gasdurchtrittskanal berandet.

Die Kanalbegrenzungselemente können beispielsweise als einstückig mit dem Trägerelement verbundene Laschen ausgebildet sein.

Es ist aber auch möglich, daß eines oder beide der Kanalbegrenzungselemente separat von dem Trägerelement hergestellt und anschließend, beispielsweise durch Verschweißen, an dem Trägerelement festgelegt werden.

Außerdem kann vorgesehen sein, daß eines oder beide der Kanalbegrenzungselemente an einem zweiten Trägerelement festgelegt und/oder einstückig mit dem zweiten Trägerelement ausgebildet sind.

Das zweite Trägerelement kann einstückig mit dem ersten Trägerelement ausgebildet und/oder einstückig mit dem ersten Trägerelement ausgebildet sein.

Das zweite Trägerelement kann den Gasdurchtrittskanal, vorzugsweise auf dessen dem ersten Trägerelement gegenüberliegender Seite, beranden.

Bei dem erfindungsgemäßen Abstützelement ist vorgesehen, dass das Abstützelement mindestens ein Trägerelement und mindestens eine einstückig mit dem Trägerelement ausgebildete Lasche umfasst, die im montierten Zustand des Abstützelements aus der Ebene des Trägerelements herausgebogen ist.

Ein solches Abstützelement ist besonders einfach und kostengünstig herstellbar. Ferner können solche Abstützelemente ringförmig mit beliebig kleinem Ringinnendurchmesser hergestellt werden.

Bei einer besonders bevorzugten Ausgestaltung der Erfindung ist vorgesehen, dass das Trägerelement als eine im wesentlichen ebene Platte ausgebildet ist.

Um eine günstige Verteilung der Flächenpressungen im Abstützelement zu erzielen, ist vorgesehen, dass die mindestens eine Lasche im montierten Zustand der Dichtung an dem Trägerelement, vorzugsweise flächig, anliegt.

Um einen Gasdurchtritt durch das Abstützelement zu ermöglichen, ist vorteilhafterweise vorgesehen, dass das Abstützelement mindestens eine Gasdurchtrittsöffnung aufweist und die mindestens eine Lasche im montierten Zustand des Abstützelements eine solche Gasdurchtrittsöffnung berandet.

Bei bevorzugten Ausgestaltungen der Erfindung ist das mindestens eine Trägerelement mit mehreren Laschen versehen.

Das Trägerelement ist als ein geschlossener Ring ausgebildet.

Die mindestens eine Lasche des Trägerelements kann dabei an der Ringinnenseite oder an der Ringaußenseite des Trägerelements angeordnet sein.

Ferner kann vorgesehen sein, dass mindestens eine Lasche an der Ringinnenseite und mindestens eine weitere Lasche an der Ringaußenseite des Trägerelements angeordnet ist.

Um eine größere Höhe des Abstützelements erzielen zu können, ist vorteilhafterweise vorgesehen, dass das Abstützelement mindestens zwei Trägerelemente umfasst.

Diese Trägerelemente können insbesondere einstückig miteinander verbunden sein.

Bei einer bevorzugten Ausgestaltung des Abstützelements ist vorgesehen, dass die mindestens zwei Trägerelemente über einen im montierten Zustand des Abstützelements, vorzugsweise U-förmig, gebogenen Bereich miteinander verbunden sind.

Alternativ oder ergänzend hierzu kann vorgesehen sein, dass das Abstützelement ein erstes Trägerelement mit einer ersten Lasche und ein zweites Trägerelement mit einer zweiten Lasche umfasst, wobei die erste Lasche und die zweite Lasche aneinander angrenzen.

Um eine günstige Pressungsverteilung im fertig montierten Abstützelement zu erzielen, ist vorzugsweise vorgesehen, dass die Laschen von mindestens zwei Trägerelementen im montierten Zustand des Abstützelements, vorzugsweise flächig, aneinander anliegen.

Zur optimalen Materialausnutzung und aus fertigungstechnischen Gründen ist es von Vorteil, wenn mindestens ein Trägerelement einstückig mit einer der Gehäusewände der Brennstoffzelleneinheit ausgebildet ist.

In diesem Fall ist es möglich, das Abstützelement zusammen mit der betreffenden Gehäusewand aus einem Ausgangsmaterial, beispielsweise aus einem Stahlblech, herauszutrennen und das Abstützelement durch Biegearbeitsgänge herzustellen und an einem Gaskanal der Brennstoffzelleneinheit zu positionieren, ohne daß das Abstützelement getrennt von der Gehäusewand hergestellt und anschließend mit der Gehäusewand zusammengeführt werden müßte.

Alle zur Herstellung und Positionierung des Abstützelements erforderlichen Stanz- und Biegearbeitsgänge können in diesem Fall in einem Folgeverbundwerkzeug durchgeführt werden.

Alternativ hierzu ist es aber auch möglich, das Abstützelement als von den Gehäusewänden separates Teil auszubilden und erst bei der Montage der Brennstoffzelleneinheit mit den Gehäusewänden zusammenzuführen.

Das erfindungsgemäße Abstützelement kann je nach gewünschter Einbaudicke mehrere Lagen umfassen, wobei einige dieser Lagen aus ringförmig geschlossenen Trägerelementen und andere Lagen aus an den Trägerelementen angeordneten und auf die Trägerelemente zurückgefalteten Laschen gebildet sind. Die Laschen können an der Ringaußenseite oder an der Ringinnenseite des jeweiligen Trägerelements angeordnet sein. Ferner ist es möglich, daß ein Trägerelement sowohl mindestens eine an seiner Ringaußenseite angeordnete Lasche als auch mindestens eine an seiner Ringinnenseite ausgebildete Lasche aufweist.

Durch das Umfalten der Laschen auf die Oberseite oder Unterseite des jeweiligen Trägerelements und anschließendes Aufeinanderfalten mehrerer Trägerelemente mit den daran angeordneten Laschen ergeben sich mehrlagige Pakete aus dem Ausgangsmaterial, insbesondere aus Stahlblech, mit innenliegenden Kanälen, die eine Gasströmung von der Ringinnenseite zu der Ringaußenseite des so gebildeten Abstützelements ermöglichen.

Alternativ zu dem Vorstehenden kann auch vorgesehen sein, daß eine Mehrzahl von Abstützelementen vorgesehen ist, zwischen denen Gasdurchlässe ausgebildet sind, um einen Gastransport zwischen den Gasdurchgangsöffnungen und dem Innenraum des Gehäuses zu ermöglichen.

Da das Abstützelement weder eine Abdichtfunktion noch eine elektrische Isolationsfunktion ausüben muß, kann als Material für das Abstützelement jedes Material verwendet werden, welches bei der Betriebstemperatur der Brennstoffzelleneinheit eine ausreichend hohe mechanische Stabilität aufweist.

So kann beispielsweise vorgesehen sein, daß das Abstützelement ein metallisches Material umfaßt.

Alternativ oder ergänzend hierzu kann vorgesehen sein, daß das Abstützelement ein keramisches Material, beispielsweise eine Oxidkeramik, insbesondere Aluminiumoxid und/oder Zirkoniumoxid, umfaßt.

Bei einer besonders bevorzugten Ausgestaltung der Erfindung ist vorgesehen, daß das Abstützelement als poröses Sinterelement aus einem keramischen und/oder einem metallischen Werkstoff ausgebildet ist.

Damit sich beide Gehäusewände des Gehäuses der Brennstoffzelleneinheit an dem Abstützelement abstützen können, ist vorzugsweise vorgesehen, daß das Abstützelement sowohl an der ersten Gehäusewand als auch an der der ersten Gehäusewand gegenüberliegenden zweiten Gehäusewand flächig anliegt.

Das Abstützelement kann als separates Bauteil ausgebildet sein, welches bei der Montage des Gehäuses der Brennstoffzelleneinheit zwischen die erste Gehäusewand und die zweite Gehäusewand eingelegt wird.

Alternativ hierzu kann jedoch auch vorgesehen sein, daß zumindest ein Teil des Abstützelements einstückig mit der ersten Gehäusewand oder einstückig mit der zweiten Gehäusewand ausgebildet ist. Hierdurch kann das Gehäuse rascher montiert werden.

Das Abstützelement ist besonders einfach herstellbar, wenn vorgesehen ist, daß zumindest ein Teil des Abstützelements durch ein- oder mehrfaches Umbiegen eines Randbereichs der in der ersten Gehäusewand vorgesehenen Gasdurchgangsöffnung oder eines Randbereichs der in der zweiten Gehäusewand vorgesehenen Gasdurchgangsöffnung gebildet ist.

Anspruch 26 ist auf einen Brennstoffzellenblockverbund gerichtet, welcher eine Mehrzahl von erfindungsgemäßen Brennstoffzelleneinheiten umfaßt, die längs der Stapelrichtung des Brennstoffzellenblockverbunds aufeinander folgen.

Um die Brennstoffzelleneinheiten des Brennstoffzellenblockverbunds mit der für eine ausreichende Abdichtwirkung erforderlichen Dichtflächenpressung beaufschlagen zu können, umfaßt der Brennstoffzellenblockverbund vorteilhafterweise eine Spanneinrichtung, mit welcher die die Gasdurchgangsöffnungen aufweisenden Bereiche der Gehäuse der Brennstoffzelleneinheiten gegeneinander verspannbar sind.

Bei einer bevorzugten Ausgestaltung des erfindungsgemäßen Brennstoffzellenblockverbunds ist vorgesehen, daß derselbe eine weitere Spanneinrichtung umfaßt, mit welcher weitere Bereiche der Gehäuse der Brennstoffzelleneinheiten unabhängig von der Verspannung der die Gasdurchgangsöffnungen aufweisenden Bereiche der Brennstoffzelleneinheiten gegeneinander verspannbar sind. Dies ermöglicht es, unterschiedliche Bereiche der Gehäuse der Brennstoffzelleneinheiten mit unterschiedlichen Flächenpressungen zu beaufschlagen.

Insbesondere kann vorgesehen sein, daß mittels der weiteren Spanneinrichtung Kathoden-Anoden-Elektrolyt-Einheiten und Kontaktplatten, die mit den Kathoden-Anoden-Elektrolyt-Einheiten in elektrisch leitendem Kontakt stehen, gegeneinander verspannbar sind. Dadurch wird es möglich, den Anpressdruck, mit welchem die Kontaktelemente der Kontaktplatten gegen die Kontaktflächen der Kathoden-Anoden-Elektrolyt-Einheiten der Brennstoffzelleneinheiten angedrückt werden - und somit eine elastische Verformung dieser Kontaktelemente - unabhängig von der Dichtflächenpressung, mit welcher die Flachdichtungen an den Gasdurchgangsöffnungen der Brennstoffzelleneinheiten beaufschlagt werden, auf einen optimalen Wert einzustellen.

Weitere Merkmale und Vorteile der Erfindung sind Gegenstand der nachfolgenden Beschreibung und zeichnerischen Darstellung von Ausführungsbeispielen. In den Zeichnungen zeigen:
- Fig. 1: eine schematische perspektivische Darstellung einer Brennstoffzellenvorrichtung mit Zuführleitungen und Abführleitungen für das Oxidationsmittel und das Brennstoffgas;
- Fig. 2: einen schematischen vertikalen Schnitt durch einen in dem Gehäuse der Brennstoffzellenvorrichtung aus Fig. 1 angeordneten Brennstoffzellenblockverbund;
- Fig. 3: eine Draufsicht von oben auf Endplatten des Brennstoffzellenblockverbunds aus Fig. 2;
- Fig. 4: einen schematischen Längsschnitt durch eine Kathoden-Anoden-Elektrolyt-Einheit mit daran angrenzenden Kontaktplatten;
- Fig.5: eine schematische Draufsicht auf eine Kontaktplatte einer Brennstoffzelleneinheit;
- Fig. 6: eine schematische Draufsicht auf einen Fluidführungsrahmen einer Brennstoffzelleneinheit;
- Fig. 7: den rechten Teil eines schematischen Querschnitts durch vier in der Stapelrichtung des Brennstoffzellenblockverbunds aufeinanderfolgende Brennstoffzelleneinheiten;
- Fig. 8: den rechten Teil eines schematischen Längsschnitts durch vier längs der Stapelrichtung des Brennstoffzellenblockverbunds aufeinanderfolgende Brennstoffzelleneinheiten im Bereich eines Gaskanals;
- Fig. 9: den rechten Teil eines schematischen Längsschnitts durch vier längs der Stapelrichtung des Brennstoffzellenblockverbunds aufeinanderfolgende Brennstoffzelleneinheiten im Bereich zwischen zwei Gaskanälen;
- Fig. 10: eine schematische perspektivische Darstellung eines einen Gaskanal umgebenden ringförmigen Abstützelements einer Brennstoffzelleneinheit;
- Fig. 11: eine vergrößerte Darstellung des Bereichs I aus Fig. 7;
- Fig. 12: eine schematische perspektivische Explosionsdarstellung zweier in der Stapelrichtung aufeinanderfolgender Brennstoffzelleneinheiten;
- Fig. 13: eine Draufsicht auf das Gehäuse einer Brennstoffzelleneinheit im Bereich einer Gasdurchgangsöffnung bei einer zweiten Ausführungsform der Brennstoffzelleneinheit, welche eine Vielzahl einstückig mit den Gehäusewänden ausgebildeter Abstützelemente aufweist;
- Fig. 14: einen schematischen Schnitt durch das Gehäuse der Brennstoffzelleneinheit aus Fig. 13 längs der Linie 14-14 in Fig. 13;
- Fig. 15: einen schematischen Schnitt durch das Gehäuse der Brennstoffzelleneinheit aus Fig. 13 längs der Linie 15-15 in Fig. 13;
- Fig. 16: eine schematische Draufsicht auf eine weitere Ausführungsform eines einen Gaskanal umgebenden ringförmigen Abstützelements einer Brennstoffzelleneinheit, welches ringförmige Trägerelemente und daran angeordnete Laschen umfaßt, im montierten Zustand des Abstützelements;
- Fig. 17: einen schematischen Schnitt durch das Abstützelement aus Fig. 16 längs der Linie 17-17 in Fig. 16;
- Fig. 18: eine schematische Draufsicht auf eine Abstützelement-Vorform, aus welcher das in den Fig. 16 und 17 dargestellte Abstützelement durch Faltvorgänge gebildet wird;
- Fig. 19: eine schematische Draufsicht auf eine weitere Ausführungsform eines einen Gaskanal umgebenden ringförmigen Abstützelements einer Brennstoffzelleneinheit, welches ringförmige Trägerelemente mit daran angeordneten Laschen umfaßt, in einem montierten Zustand des Abstützelements;
- Fig. 20: einen schematischen Schnitt durch das Abstützelement aus Fig. 19 längs der Linie 20-20 in Fig. 19;
- Fig. 21: eine schematische Draufsicht auf eine Abstützelement-Vorform, aus welcher das in den Fig. 19 und 20 dargestellte Abstützelement durch Faltvorgänge gebildet wird;
- Fig. 22: eine schematische Draufsicht auf eine weitere Ausführungsform eines einen Gaskanal umgebenden ringförmigen Abstützelements einer Brennstoffzelleneinheit, welches zwei ringförmige Trägerelemente und daran angeordnete Laschen umfaßt, in einem montierten Zustand des Abstützelements;
- Fig. 23: eine schematische Draufsicht auf eine Abstützelement-Vorform, aus welcher das in Fig. 22 dargestellte Abstützelement durch Faltvorgänge gebildet wird; und
- Fig. 24: eine schematische Draufsicht auf einen Fluidführungsrahmen einer Brennstoffzelleneinheit mit an dem Fluidführungsrahmen anhängenden Abstützelement-Vorformen.

Gleiche oder funktional äquivalente Elemente sind in allen Figuren mit denselben Bezugszeichen bezeichnet.

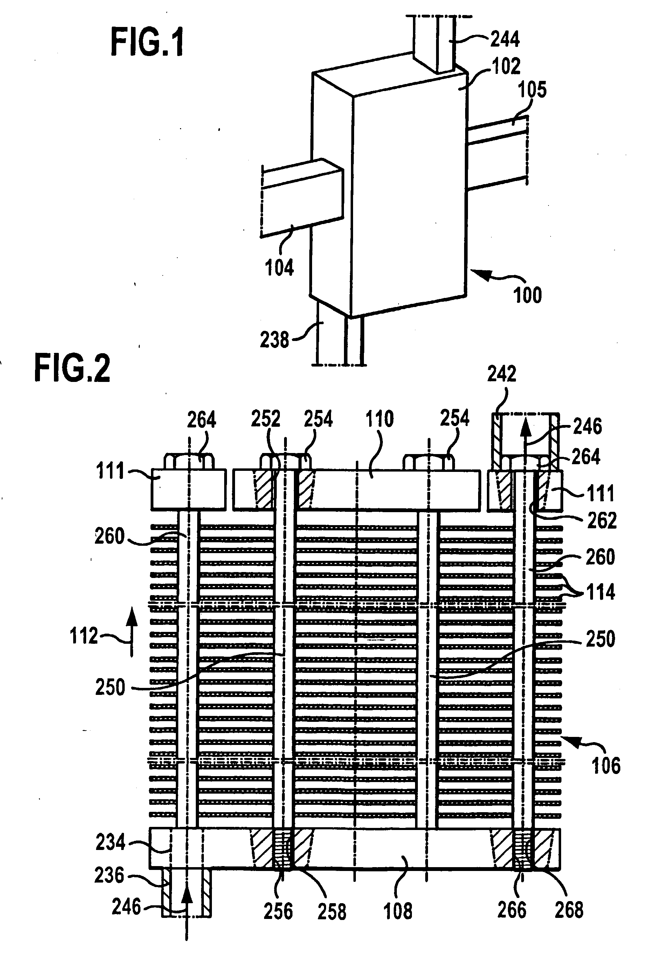

Eine in den Fig. 1 bis 12 dargestellte, als Ganzes mit 100 bezeichnete Brennstoffzellenvorrichtung umfaßt ein im wesentlichen quaderförmiges Gehäuse 102 (siehe Fig. 1), in das eine Oxidationsmittel-Zuführleitung 104 mündet, über die dem Innenraum des Gehäuses 102 ein Oxidationsmittel, beispielsweise Luft oder reiner Sauerstoff, von einem (nicht dargestellten) Zuführgebläse unter einem Überdruck von beispielsweise ungefähr 50 mbar zugeführt wird.

Ferner mündet in das Gehäuse 102 eine Oxidationsmittel-Abführleitung 105, durch welche überschüssiges Oxidationsmittel aus dem Innenraum des Gehäuses 102 abführbar ist.

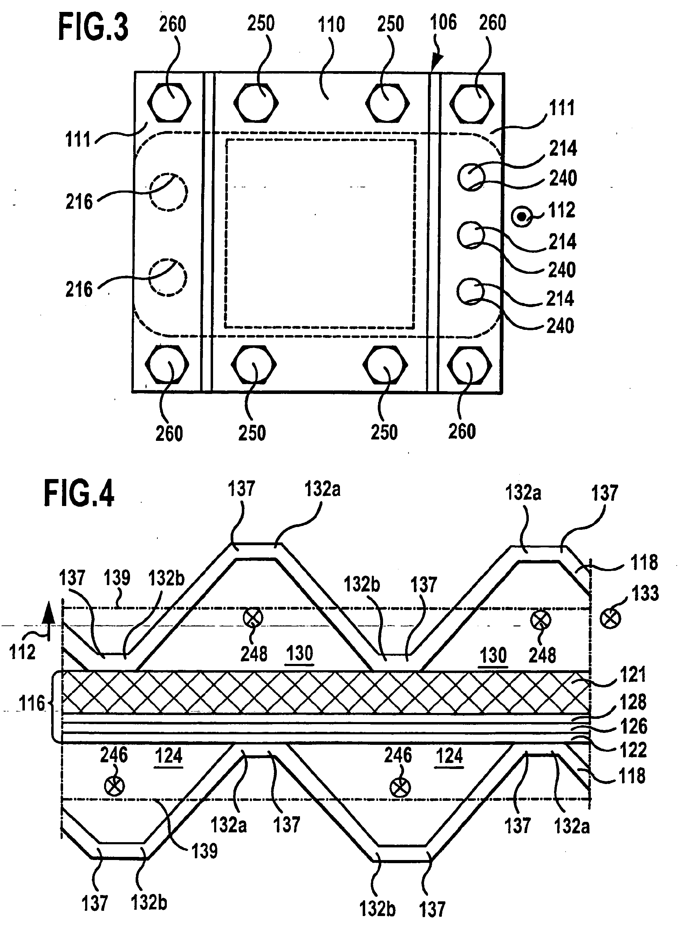

Im Innenraum des Gehäuses 102 ist ein in den Fig. 2 und 3 als Ganzes dargestellter Brennstoffzellenblockverbund 106 angeordnet, welcher eine untere Endplatte 108, eine mittlere obere Endplatte 110, zwei seitliche obere Endplatten 111 und eine Vielzahl zwischen der unteren Endplatte 108 und den oberen Endplatten 110, 111 angeordneter, längs einer Stapelrichtung 112 aufeinanderfolgender Brennstoffzelleneinheiten 114 umfaßt.

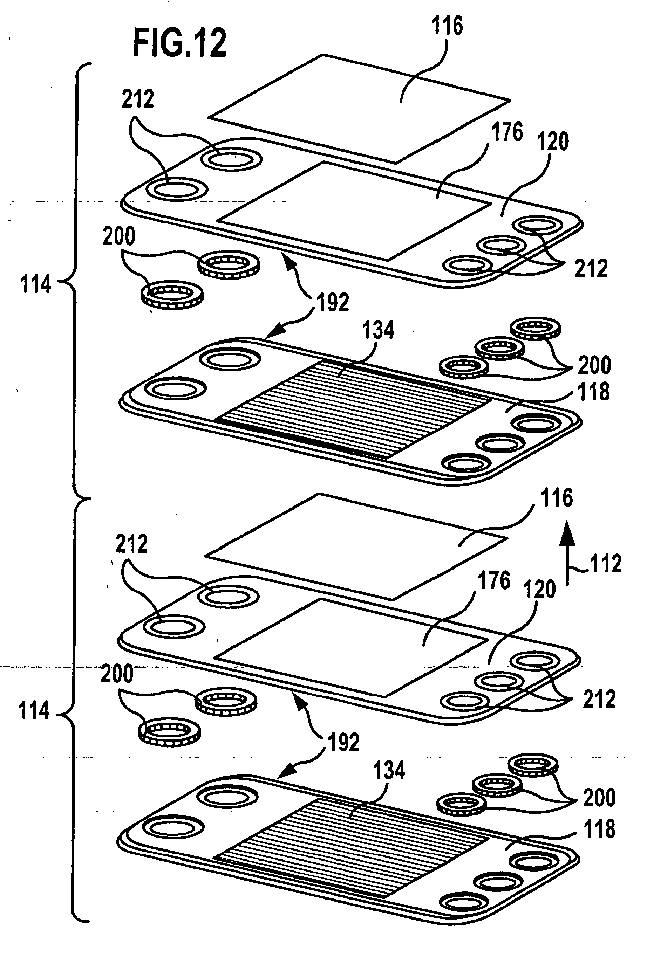

Wie am besten aus Fig. 12 zu ersehen ist, welche eine perspektivische Explosionsdarstellung zweier längs der Stapelrichtung 112 aufeinanderfolgender Brennstoffzelleneinheiten 114 zeigt, umfaßt jede der Brennstoffzelleneinheiten 114 eine im wesentlichen plattenförmige Kathoden-Anoden-Elektrolyt-Einheit 116 (im folgenden kurz als KAE-Einheit bezeichnet), die zwischen einer Kontaktplatte 118 und einem Fluidführungsrahmen 120 gehalten ist.

Die KAE-Einheit 116 umfaßt, wie in Fig. 4 rein schematisch dargestellt ist, ein gasdurchlässiges, elektrisch leitfähiges Substrat 121, das beispielsweise als Metalldrahtgeflecht, Metalldrahtvlies, Metalldrahtgewebe, Metalldrahtgestrick oder als ein aus gesinterten oder gepreßten Metallpartikeln bestehender poröser Körper ausgebildet sein kann, wobei durch das Substrat 121 ein Brenngas aus einem an das Substrat 121 angrenzenden Brenngasraum 124 hindurchtreten kann.

Ferner umfaßt die KAE-Einheit 116 eine auf dem Substrat 121 angeordnete plattenförmige Anode 122 aus einem elektrisch leitfähigen keramischen Material, beispielsweise Ni-ZrO₂-Cermet (Keramik-Metall-Gemisch), welches porös ist, um dem Brenngas aus dem Brenngasraum 124 den Durchtritt durch die Anode 122 zu dem an die Anode 122 angrenzenden Elektrolyten 126 zu ermöglichen.

Als Brenngas kann beispielsweise ein kohlenwasserstoffhaltiges Gasgemisch oder reiner Wasserstoff verwendet werden.

Der Elektrolyt 126 ist vorzugsweise als Feststoffelektrolyt ausgebildet uns beispielsweise aus Yttrium-stabilisiertem Zirkoniumdioxid gebildet.

Auf der der Anode 122 gegenüberliegenden Seite des Elektrolyten 126 grenzt an denselben eine plattenförmige Kathode 128, die aus einem elektrisch leitfähigen keramischen Material, beispielsweise aus LaMnO₃, gebildet ist und eine Porosität aufweist, um einem Oxidationsmittel, beispielsweise Luft oder reinem Sauerstoff, aus einem an die Kathode 128 angrenzenden Oxidationsmittelraum 130 den Durchtritt zu dem Elektrolyten 126 zu ermöglichen.

Der Elektrolyt 126 ist im wesentlichen gasdicht, so daß kein Oxidationsmittel aus dem Oxidationsmittelraum 130 durch den Elektrolyten 126 in den Brenngasraum 124 und kein Brenngas aus dem Brenngasraum 124 durch den Elektrolyten 126 in den Oxidationsmittelraum 130 gelangen kann.

Im Betrieb der Brennstoffzellenvorrichtung weist die KAE-Einheit 116 jeder Brennstoffzelleneinheit 114 eine Temperatur von beispielsweise ungefähr 850°C auf, bei welcher der Elektrolyt 126 für Sauerstoffionen leitfähig ist. Das Oxidationsmittel aus dem Oxidationsmittelraum 130 nimmt an der Anode 122 Elektronen auf und gibt zweiwertige Sauerstoffionen an den Elektrolyten 126 ab, welche durch den Elektrolyten 126 hindurch zur Anode 122 wandern. An der Anode 122 wird das Brenngas aus dem Brenngasraum 124 durch die Sauerstoffionen aus dem Elektrolyten 126 oxidiert und gibt dabei Elektronen an die Anode 122 ab.

Die Kontaktplatten 118 dienen dazu, die bei der Reaktion an der Anode 122 frei werdenden Elektronen von der Anode 122 über das Substrat 121 abzuführen bzw. die für die Reaktion an der Kathode 128 benötigten Elektronen der Kathode 128 zuzuführen.

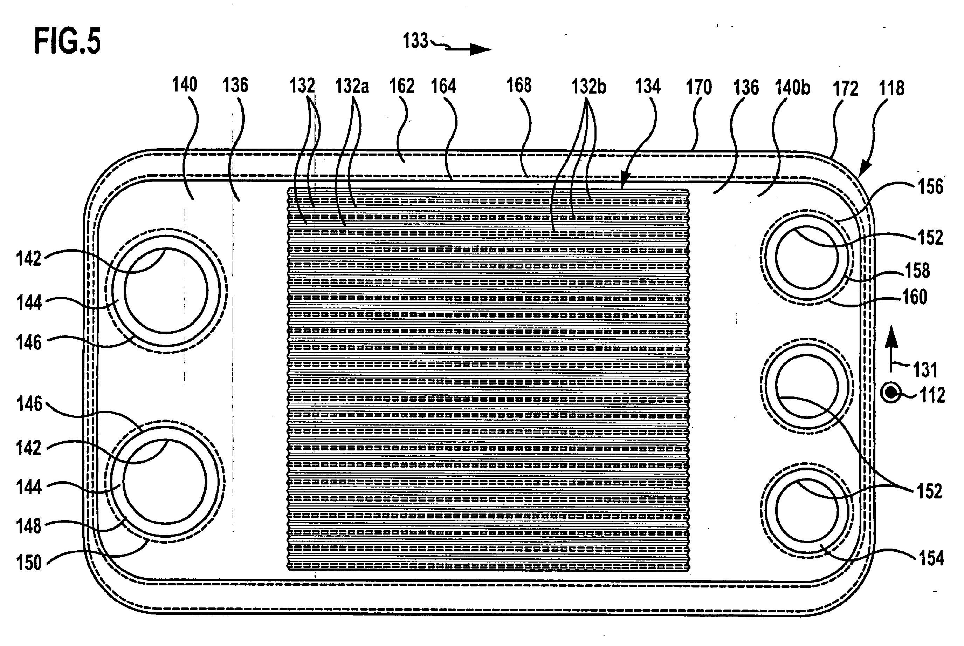

Hierzu besteht jede der Kontaktplatten 118 aus einem elektrisch gut leitfähigen Metallblech, das (wie am besten aus Fig. 5 zu ersehen ist) mit einer Vielzahl von Kontaktelementen 132 versehen ist, welche beispielsweise die Form sich in der Längsrichtung 133 der Kontaktplatte 118 erstreckender Rippen aufweisen, die in der Querrichtung 131 der Kontaktplatte 118 aufeinander folgen, wobei die in der Querrichtung 131 aufeinanderfolgenden Kontaktelemente 132 unmittelbar aneinander angrenzen und von der Mittelebene 139 der Kontaktplatte 118 aus abwechselnd zu verschiedenen Seiten der Kontaktplatte 118 vorspringen. Die von der Kontaktplatte 118 nach oben und somit zu der Anode 122 der derselben Brennstoffzelleneinheit 114 zugehörigen KAE-Einheit 116 vorspringenden anodenseitigen Kontaktelemente sind mit dem Bezugszeichen 132a, die von der Kontaktplatte 118 nach unten und damit zu der Kathode 128 der einer benachbarten Brennstoffzelleneinheit 114 zugehörigen KAE-Einheit 116 vorspringenden kathodenseitigen Kontaktelemente sind mit dem Bezugszeichen 132b bezeichnet.

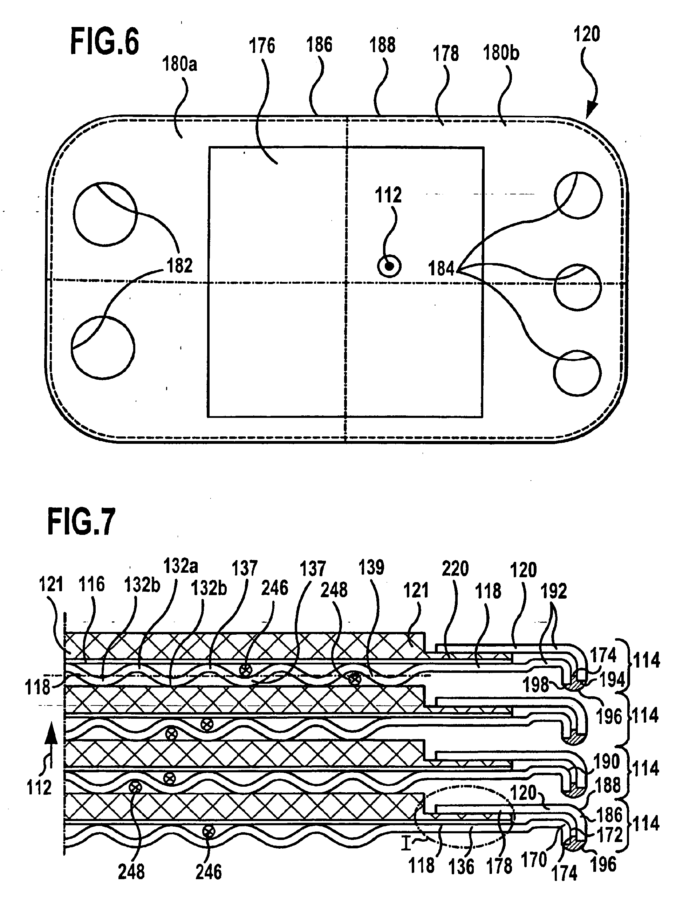

Jedes der Kontaktelemente 132 weist einen mittigen, streifenförmigen Kontaktbereich 137 auf, an dem es mit einer angrenzenden KAE-Einheit 116 in elektrisch leitendem Kontakt steht (siehe insbesondere Fig. 4 und Fig. 7).

Die Kontaktbereiche 137 der anodenseitigen Kontaktelemente 132a einer Kontaktplatte 118 stehen mit dem Substrat 121 und somit mit der Anode 122 der derselben Brennstoffzelleneinheit 114 zugehörigen KAE-Einheit 116 in elektrischem Flächenkontakt, so daß Elektronen von der jeweiligen Anode 122 in die Kontaktplatte 118 gelangen können.

Die kathodenseitigen Kontaktelemente 132b der Kontaktplatten 118 stehen jeweils mit der Kathode 128 der einer benachbarten Brennstoffzelleneinheit 114 zugehörigen KAE-Einheit 116 in elektrisch leitfähigem Flächenkontakt, so daß Elektronen von der Kontaktplatte 118 zu der Kathode 128 gelangen können. Auf diese Weise ermöglichen die Kontaktplatten 118 den Ladungsausgleich zwischen den Anoden 122 und den Kathoden 128 längs der Stapelrichtung 112 aufeinanderfolgender KAE-Einheiten 116.

Die an den Enden des Brennstoffzellenblockverbunds 106 angeordneten Kontaktplatten 118 sind (auf nicht zeichnerisch dargestellte Weise) mit einem externen Stromkreislauf verbunden, um die an diesen randständigen Kontaktplatten 118 entstehenden elektrischen Ladungen abzugreifen.

Das aus den Kontaktelementen 132 gebildete Kontaktfeld 134 jeder Kontaktplatte 118 weist die Struktur eines in der Querrichtung 131 der Kontaktplatte 118 gewellten Wellblechs auf.

Wie am besten aus der Draufsicht der Fig. 5 zu ersehen ist, ist das mit den Kontaktelementen 132 versehene mittige, im wesentlichen rechteckige Kontaktfeld 134 jeder Kontaktplatte 118 in einen ebenen, im wesentlichen rechteckigen Gasführungsbereich 136 der Kontaktplatte 118 eingebettet.

Der Gasführungsbereich 136 weist zu beiden Seiten des Kontaktfeldes 134 jeweils einen Seitenbereich 140a bzw. 140b auf.

In dem Seitenbereich 140a sind mehrere, beispielsweise zwei, im wesentlichen kreisförmige Brenngasdurchgangsöffnungen 142 ausgebildet.

Jede der Brenngasdurchgangsöffnungen 142 ist von einem ringförmigen Randbereich 144 umgeben, wobei jeder der Bereiche 142 gegenüber dem Gasführungsbereich 136 längs der Stapelrichtung 112 nach unten versetzt und mit dem Gasführungsbereich 136 über eine Schräge 146, welche an einer inneren Biegelinie 148 an den jeweiligen Randbereich 144 und längs einer äußeren Biegelinie 150 an den Gasführungsbereich 136 angrenzt, verbunden ist.

Die Brenngasdurchgangsöffnungen 142 dienen dem Durchtritt von den Brennstoffzelleneinheiten 114 zuzuführendem Brenngas durch die jeweilige Kontaktplatte 118.

Der dem Seitenbereich 140a gegenüberliegende Seitenbereich 140b jeder Kontaktplatte 118 ist mit mehreren, beispielsweise mit drei, im wesentlichen kreisförmigen Abgasdurchgangsöffnungen 152 versehen.

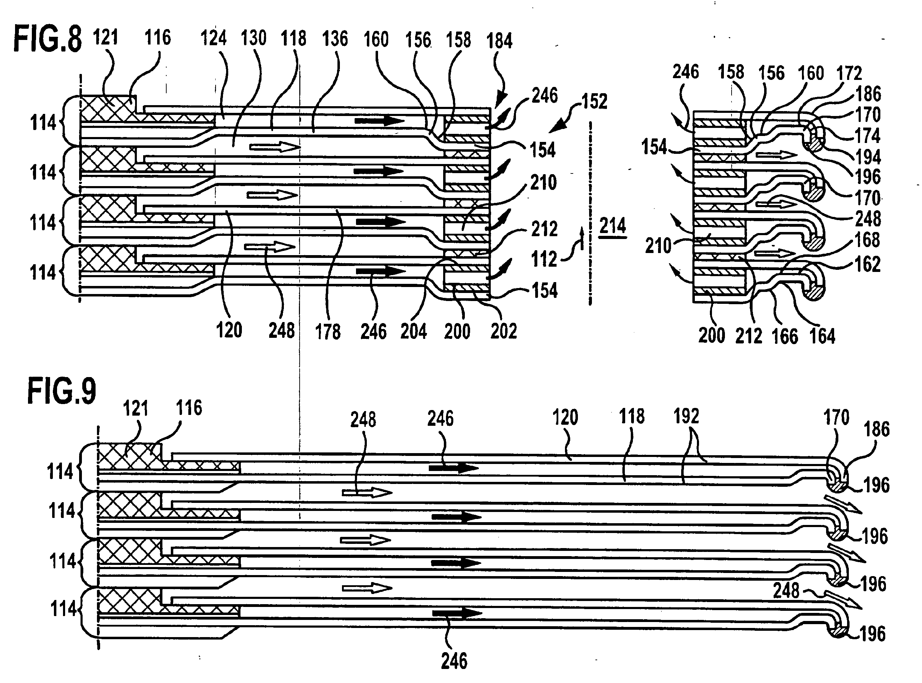

Jede der Abgasdurchgangsöffnungen 152 ist von einem ringförmigen Randbereich 154 umgeben, welcher gegenüber dem Gasführungsbereich 136 der Kontaktplatte 118 längs der Stapelrichtung 112 nach unten versetzt ist und mit dem Gasführungsbereich 136 über eine Schräge 156, welche an einer inneren Biegelinie 158 an den Randbereich 154 und längs einer äußeren Biegelinie 160 an den Gasführungsbereich 136 angrenzt, mit dem Gasführungsbereich 136 verbunden ist (siehe insbesondere Fig. 8).

Die Abgasdurchgangsöffnungen 152 der Kontaktplatte 118 ermöglichen den Durchtritt von aus den Brennstoffzelleneinheiten 114 abzuführendem Abgas, welches überschüssiges Brenngas und Verbrennungsprodukte, insbesondere Wasser, enthält, durch die Kontaktplatte 118.

Ferner ist jede Kontaktplatte 118 mit einem den Gasführungsbereich 136 umschließenden Randbereich 162 versehen, welcher senkrecht zur Stapelrichtung 112 ausgerichtet ist, gegenüber dem Gasführungsbereich 136 längs der Stapelrichtung 112 nach oben versetzt ist und mit dem Gasführungsbereich 136 über eine Schräge 164, welche längs einer inneren Biegelinie 166 an den Gasführungsbereich 136 und längs einer äußeren Biegelinie 168 an den Randbereich 162 angrenzt, verbunden ist.

Der äußere Rand des Randbereichs 162 ist mit einem Verbindungsflansch 170 versehen, welcher längs einer Biegelinie 172 an den Randbereich 162 angrenzt und sich von dem Randbereich 162 im wesentlichen parallel zu der Stapelrichtung 112 nach unten erstreckt.

Die im wesentlichen parallel zur Stapelrichtung 112 ausgerichtete Außenfläche des Verbindungsflansches 170 bildet eine erste Verbindungsfläche 174.

Jede der Kontaktplatten 118 ist als Blechformteil ausgebildet, welches aus einer im wesentlichen ebenen, im wesentlichen rechteckigen Blechlage durch Prägen und/oder Tiefziehen sowie durch Ausstanzen oder Ausschneiden der Brenngasdurchgangsöffnungen 142 und der Abgasdurchgangsöffnungen 152 gebildet ist.

Auch die Fluidführungsrahmen 120 sind als Blechformteile aus einer im wesentlichen ebenen, im wesentlichen rechteckigen Blechlage gebildet.

Wie am besten aus Fig. 6 zu ersehen ist, weist jeder Fluidführungsrahmen 120 eine im wesentlichen rechteckige, mittige Durchtrittsöffnung 176 für den Durchtritt der KAE-Einheit 116 derselben Brennstoffzelleneinheit 114 auf.

Diese Durchtrittsöffnung 176 ist von einem im wesentlichen ebenen, senkrecht zur Stapelrichtung 112 ausgerichteten Gasführungsbereich 178 umgeben, welcher zwei Seitenbereiche 180a, 180b umfaßt, welche einander an der Durchtrittsöffnung 176 gegenüberliegen.

In dem Seitenbereich 180a sind mehrere, beispielsweise zwei, im wesentlichen kreisförmige Brenngasdurchgangsöffnungen 182 ausgebildet, welche den Durchtritt von Brenngas durch den Fluidführungsrahmen 120 ermöglichen.

In dem dem Seitenbereich 180a gegenüberliegenden Seitenbereich 180b des Gasführungsbereichs 178 sind mehrere, beispielsweise drei, im wesentlichen kreisförmige Abgasdurchgangsöffnungen 184 ausgebildet, welche den Durchtritt von aus den Brennstoffzelleneinheiten 114 abzuführendem Abgas durch den Fluidführungsrahmen 120 ermöglichen.

Der Gasführungsbereich 178 jedes Fluidführungsrahmens 120 ist an seinem äußeren Rand mit einem Verbindungsflansch 186 versehen, welcher längs einer Biegelinie 188 an den Gasführungsbereich 178 angrenzt und sich von dem Gasführungsbereich 178 im wesentlichen parallel zu der Stapelrichtung 112 nach unten erstreckt.

Die im wesentlichen parallel zur Stapelrichtung 112 ausgerichtete Innenseite des Verbindungsflansches 186 bildet eine zweite Verbindungsfläche 190.

Jeweils ein Fluidführungsrahmen 120 und eine Kontaktplatte 118 bilden zusammen ein Gehäuse 192 einer Brennstoffzelleneinheit 114.

Wie aus den Fig. 7 bis 9 zu ersehen ist, sind der Fluidführungsrahmen 120 und die Kontaktplatte 118 eines solchen Gehäuses 192 einer Brennstoffzelleneinheit 114 an ihren Verbindungsflanschen 186 bzw. 170 aneinander festgelegt und gasdicht gegeneinander abgedichtet.

Dabei umgreift der im wesentlichen parallel zur Stapelrichtung 112 ausgerichtete Verbindungsflansch 186 des Fluidführungsrahmens 120 den ebenfalls im wesentlichen parallel zur Stapelrichtung 112 ausgerichteten Verbindungsflansch 170 der Kontaktplatte 118 derart, daß die erste Verbindungsfläche an dem Verbindungsflansch 170 der Kontaktplatte 118 und die zweite Verbindungsfläche 190 an dem Verbindungsflansch 186 des Fluidführungsrahmens 120 einander gegenüberstehen.

Wie aus den Fig. 7 bis 9 zu ersehen ist, sind der untere Rand 194 und die zweite Verbindungsfläche 190 des Verbindungsflansches 186 des Fluidführungsrahmens 120 mittels einer Schweißnaht 196 mit der ersten Verbindungsfläche 174 und an dem unteren Rand 198 des Verbindungsflansches 170 der Kontaktplatte 118 verbunden und so an dem Verbindungsflansch 170 der Kontaktplatte 118 festgelegt.

Dabei sorgt die längs der Ränder der Kontaktplatte 118 und des Fluidführungsrahmens 120 umlaufende Schweißnaht 196 für einen gasdichten Verschluß des Zwischenraums zwischen den Verbindungsflanschen 186 und 170.

Die Schweißnaht 196 kann beispielsweise im Laserschweißverfahren oder im Elektronenstrahlverfahren hergestellt werden.

Alternativ oder ergänzend zu einer Verschweißung kann die Verbindung zwischen den Verbindungsflanschen 186 und 170 auch durch Verlötung, insbesondere durch eine Hartlötung, erfolgen.

Dadurch, daß die Verbindungsflansche 186 und 170 und insbesondere die einander gegenüberstehenden Verbindungsflächen 174 und 190 parallel zur Stapelrichtung 112 ausgerichtet sind, ist die Kontaktplatte 118 in einer Art Schiebesitz in dem Fluidführungsrahmen 120 aufgenommen, so daß die Verbindungsflansche 186 und 170 auch dann problemlos gasdicht miteinander verbunden werden können, wenn der Abstand zwischen den unteren Rändern 194 und 198 längs der Stapelrichtung 112 aufgrund von Fertigungstoleranzen bei der Herstellung der Kontaktplatte 118 und des Fluidführungsrahmens 120 oder aufgrund von Montagetoleranzen beim Zusammenbau der Brennstoffzelleneinheit 114 längs des Randes der Kontaktplatte 118 und des Randes des Fluidführungsrahmens 120 variiert.

Wie am besten aus Fig. 8 zu ersehen ist, sind im Bereich der Abgasdurchgangsöffnungen 152, 184 ringförmige Abstützelemente 200 angeordnet, welche mit ihrer Unterseite 202 jeweils an der Oberseite eines eine Abgasdurchgangsöffnung 152 umgebenden Randbereichs 154 einer Kontaktplatte 118 und mit ihrer Oberseite 204 jeweils an der Unterseite des eine Abgasdurchgangsöffnung 184 in dem Fluidführungsrahmen 120 umgebenden Bereichs des Fluidführungsrahmens 120 anliegen.

Ähnliche, sich nur in ihren Abmessungen von den Abstützelementen 200 an den Abgasdurchgangsöffnungen 152, 184 unterscheidende Abstützelemente 200 sind zwischen der Kontaktplatte 118 und dem Fluidführungsrahmen 120 im Bereich der Brenngasdurchgangsöffnungen 142, 182 angeordnet.

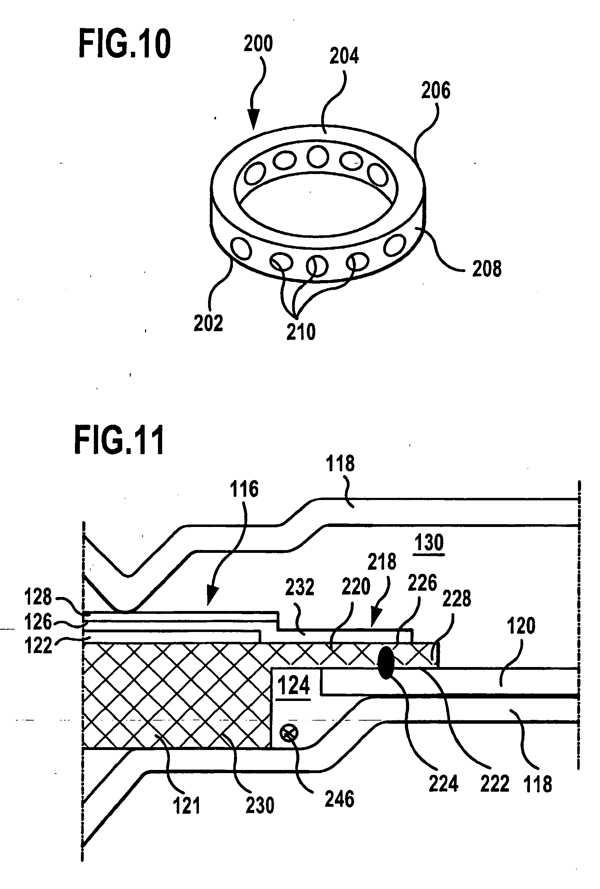

Ein solches Abstützelement 200 ist in Fig. 10 perspektivisch dargestellt und weist die Form eines Kreisringes mit einem im wesentlichen rechteckigen Querschnitt auf. Um einen Gasdurchtritt von der Innenseite zur Außenseite des Abstützelements 200 (oder in umgekehrter Richtung) zu ermöglichen, ist das Abstützelement 200 mit radial ausgerichteten, das Abstützelement 200 von dessen Innenseite 206 bis zu dessen Außenseite 208 durchsetzenden, in der Umfangsrichtung des Abstützelements 200 voneinander beabstandeten, im wesentlichen zylindrischen Gasdurchtrittskanälen 210 versehen.

Die Abstützelemente 200 dienen dazu, die Kontaktplatte 118 und den Fluidführungsrahmen 120 eines Gehäuses 192 einer Brennstoffzelleneinheit 114 auf Abstand voneinander zu halten und so ein Zusammendrücken des Gehäuses 192 durch die bei der Montage des Brennstoffzellenblockverbunds 106 auf das Gehäuse 192 einwirkende Einspannkraft zu verhindern.

Die Abstützwirkung der Abstützelemente 200 spielt bei der Betriebstemperatur der Brennstoffzellenvorrichtung 100, welche bei einer Hochtemperatur-Brennstoffzellenvorrichtung im Bereich von ungefähr 800°C bis ungefähr 1000°C liegt, eine besondere Rolle, da bei solchen Betriebstemperaturen die Streckgrenze des Stahls, aus welchem die Kontaktplatte 118 und der Fluidführungsrahmen 120 gebildet sind, auf Werte von weniger als ungefähr 10 N/mm² abfällt, so daß ohne das Vorhandensein der Abstützelemente 200 bereits geringe Einspannkräfte dazu ausreichen würden, die Kontaktplatte 118 und den Fluidführungsrahmen 120 eines Gehäuses 192 gegeneinander zu drücken.

Die Abstützelemente 200 können aus einem metallischen Material oder aus einem keramischen Material gebildet sein.

Statt eines massiven Abstützelements mit Gasdurchtrittskanälen 210 kann auch ein Abstützelement verwendet werden, welches als poröses Sinterelement aus einem keramischen und/oder einem metallischen Material gebildet ist. Ein solches Sinterelement weist bereits aufgrund seiner Porosität eine ausreichende Gasdurchlässigkeit auf, so daß ein solches Element nicht mit Gasdurchtrittskanälen versehen werden muß.

Wie am besten aus den Fig. 8 und 12 zu ersehen ist, ist zwischen der Unterseite des Randbereichs 154 jeder Abgasdurchgangsöffnung 152 in einer Kontaktplatte 118 und der Oberseite des Gasführungsbereichs 178 des in der Stapelrichtung 112 unter der betreffenden Kontaktplatte 118 angeordneten Fluidführungsrahmens 120 einer benachbarten Brennstoffzelleneinheit 114 jeweils eine Gaskanal-Dichtung 212 angeordnet. Jede der Gaskanaldichtungen 212 dichtet den Zwischenraum zwischen der angrenzenden Kontaktplatte 118 und dem angrenzenden Fluidführungsrahmen 120 gasdicht ab und umschließt die jeweilige Abgasdurchgangsöffnung 152, 184 in der Kontaktplatte 118 bzw. in dem Fluidführungsrahmen 120 ringförmig.

Wie am besten aus Fig. 8 zu erkennen ist, begrenzen die in der Stapelrichtung 112 aufeinanderfolgenden Kontaktplatten 118 und Fluidführungsrahmen 120 mit den jeweils dazwischen angeordneten Abstützelementen 200 und Gaskanal-Dichtungen 212 mehrere, beispielsweise drei, Abgaskanäle 214, in welche Abgas aus den Brenngasräumen 124 der Brennstoffzelleneinheiten 114 durch die Gasdurchtrittskanäle 210 in den Abstützelementen 200 eintreten kann und die durch die Gaskanal-Dichtungen 212 gasdicht von den Oxidationsmittelräumen 130 der Brennstoffzelleneinheiten 114 getrennt sind.

In entsprechender Weise sind auch zwischen den Randbereichen 144 der Brenngasdurchgangsöffnungen 142 jeder Kontaktplatte 118 und dem Fluidführungsrahmen 120 einer in der Stapelrichtung 112 unter der betreffenden Kontaktplatte 118 angeordneten Brennstoffzelleneinheit 114 Gaskanal-Dichtungen 212 angeordnet, welche die Brenngasdurchgangsöffnungen 142 und 182 in der Kontaktplatte 118 bzw. in dem Fluidführungsrahmen 120 ringförmig umschließen, so daß die in der Stapelrichtung 112 aufeinanderfolgenden Kontaktplatten 118 und Fluidführungsrahmen 120 zusammen mit den jeweils dazwischen angeordneten Abstützelementen 200 und Gaskanal-Dichtungen 212 mehrere, beispielsweise zwei, Brenngaskanäle 216 bilden, welche sich längs der Stapelrichtung 112 erstrecken, aus welchen Brenngas durch die Gasdurchtrittskanäle 210 in den Abstützelementen 200 in die Brenngasräume 124 der Brennstoffzelleneinheiten 114 austreten kann und welche durch die Gaskanal-Dichtungen 212 gasdicht von den Oxidationsmittelräumen 130 der Brennstoffzelleneinheiten 114 getrennt sind.

Die Gaskanal-Dichtungen 112 können beispielsweise jeweils eine Flachdichtung aus Glimmer, insbesondere aus Phlogopit, umfassen.

Alternativ oder ergänzend hierzu kann auch vorgesehen sein, daß die Gaskanal-Dichtungen 212 jeweils eine gasdichte, elektrisch isolierende Beschichtung umfassen, die als Paste im Siebdruckverfahren oder mittels Walzenbeschichtung auf die Oberfläche der Kontaktplatte 118 oder auf die Oberfläche des Fluidführungsrahmens 120 aufgebracht wird.

Ferner ist der Brenngasraum 124 jeder Brennstoffzelleneinheit 114 von dem Oxidationsmittelraum 130 einer in der Stapelrichtung 112 darüber angeordneten Brennstoffzelleneinheit 114 gasdicht durch eine Brenngasraum-Dichtung 218 getrennt, deren Aufbau im folgenden unter Bezugnahme auf die Figur 11 detailliert beschrieben wird.

Wie aus Fig. 11 zu ersehen ist, weist das Substrat 121 der KAE-Einheit 116 einen verdichteten Außenbereich 220 auf, der sich längs des gesamten Umfangs des Substrats 121 erstreckt und in welchem die Dicke des Substrats 121 durch einen Pressvorgang auf beispielsweise ungefähr 20 % der Anfangsdicke, d.h. der Dicke des ungepreßten Bereichs des Substrats 121, reduziert worden ist.

Bei diesem Verdichtungsvorgang wird die Porosität des Substrats 121, d.h. der prozentuale Anteil des gasgefüllten Volumens des Substrats 121 am Gesamtvolumen des Substrats 121, in dem verdichteten Außenbereich 220 auf nahezu Null verringert.

Um dies zu erreichen, wird bei einem Substrat 121, das eine Porosität von x % aufweist, die Dicke im verdichteten Außenbereich 220 durch den Verdichtungsvorgang vorzugsweise auf (100 - x)% der Anfangsdicke reduziert; im Falle einer Porosität von 80 % also auf 20 % der Anfangsdicke.

Das Substrat 121 wird mit der Unterseite 222 des verdichteten Außenbereichs 220 auf den Fluidführungsrahmen 120 aufgelegt und durch einen Schweißvorgang, beispielsweise durch Laserschweißen, Elektronenstrahlschweißen, Buckelschweißen oder Kondensatorentladungsschweißen, gasdicht mit dem metallischen Material des Fluidführungsrahmens 120 verbunden.

Durch den Schweißvorgang wird in dem verdichteten Außenbereich 220 des Substrats 121 eine keine Porosität mehr aufweisende gasdichte Zone 224 gebildet, welche sich von der Unterseite 222 bis zu der Oberseite 226 des verdichteten Außenbereichs 220 durch den verdichteten Außenbereich 220 des Substrats 121 hindurch erstreckt und eine sich längs des gesamten Umfangs des Substrats 121 erstreckende gasdichte Barriere bildet, welche einen Gasdurchtritt von dem außerhalb der gasdichten Zone 224 liegenden Randbereich 228 in den von der gasdichten Zone 224 umschlossenen Innenbereich 230 des Substrats 121 ebenso wie einen Gasdurchtritt in umgekehrter Richtung verhindert.

Statt durch Verschweißen des Substrats 121 mit dem Fluidführungsrahmen 120 kann die gasdichte Zone 224 im verdichteten Außenbereich 220 des Substrats 221 auch durch Verlöten des Substrats 121 mit dem Fluidführungsrahmen 120 gebildet werden. Dabei wird das verwendete Lot aufgrund der Kapillarwirkung in die noch vorhandenen Poren und Durchgangskanäle in dem verdichteten Außenbereich 220 des Substrats 121 hineingesogen und verschließt diese Durchgangsöffnungen dauerhaft, so daß eine sich über die gesamte Höhe des verdichteten Außenbereichs 220 erstreckende gasdichte Zone 224 entsteht.

Wie aus Fig. 11 ferner zu ersehen ist, erstreckt sich der gasdichte Elektrolyt 126 der KAE-Einheit 116 über den Rand der gasdurchlässigen Anode 122 und über den Rand der gasdurchlässigen Kathode 128 hinaus und liegt mit seiner Unterseite direkt auf der Oberseite 226 des verdichteten Außenbereichs 220 des Substrats 121 auf.

Dieser direkt auf dem Substrat 121 angeordnete Außenbereich 232 des Elektrolyts 126 erstreckt sich zum Rand des Substrats 121 hin so weit nach außen, daß er die gasdichte Zone 224 überdeckt und somit der Innenbereich 230 des Substrats 121 gasdicht von dem über dem Elektrolyten 126 liegenden Oxidationsmittelraum 130 getrennt ist, ohne daß für diese gasdichte Abtrennung ein zusätzliches Abdichtmedium benötigt wird.

Der Außenbereich 232 des Elektrolyten 126 bildet somit zusammen mit der gasdichten Zone 224 des verdichteten Außenbereichs 220 des Substrats 121 eine gasdichte Brenngasraum-Dichtung 218, welche den oberhalb des Fluidführungsrahmens 120 angeordneten Oxidationsmittelraum 130 gasdicht von dem unterhalb des Fluidführungsrahmens 120 angeordneten Brenngasraum 124 trennt.

Bei der in Fig. 11 dargestellten Ausführungsform der Brenngasraum-Dichtung 218 wird diese Dichtung im Bereich zwischen dem äußeren Rand der Anode 122 und der gasdichten Zone 224 des verdichteten Außenbereichs 220 des Substrats 121 durch den über die Anode 122 hinausgeführten Außenbereich 232 des Elektrolyten 126 gebildet.

Alternativ oder ergänzend hierzu kann auch vorgesehen sein, daß die Brenngasraum-Dichtung 218 einen aus einer Vergußmasse gebildeten Dichtungsbereich umfaßt, welcher den Bereich vom äußeren Rand der Anode 122 bis zu der gasdichten Zone 224 gasdicht überdeckt.

Eine solche Vergußmasse kann beispielsweise ein Glaslot, ein Metallot oder eine anorganische Paste umfassen.

Umfaßt die Brenngasraum-Dichtung 218 sowohl einen bis über die gasdichte Zone 224 hinausgezogenen Elektrolyten 126 als auch eine diesen Außenbereich 232 des Elektrolyten 126 überdeckende Vergußmasse, so wird hierdurch eine besonders dichte und zuverlässige Abdichtung des Brenngasraums 124 gegenüber dem Oxidationsmittelraum 130 erzielt.

Wie insbesondere aus Fig. 7 zu ersehen ist, liegt im montierten Zustand einer Brennstoffzelleneinheit 114 die KAE-Einheit 116 der betreffenden Brennstoffzelle 114 mit dem Substrat 121 auf den anodenseitigen Kontaktelementen 132a der Kontaktplatte 118 der Brennstoffzelleneinheit 114 auf.

Ferner liegt die KAE-Einheit 116 mit dem verdichteten Außenbereich 220 des Substrats 121 auf dem Fluidführungsrahmen 120 derselben Brennstoffzelleneinheit 114 auf, wobei sich der unverdichtete Bereich des Substrats 121 durch die Durchtrittsöffnung 176 des Fluidführungsrahmen 120 hindurch erstreckt, das Substrat 121 durch Verschweißung oder Verlötung an dem Fluidführungsrahmen 120 festgelegt ist und der Fluidführungsrahmen 120 durch Verschweißung an der Schweißnaht 196 oder durch Verlötung seines Verbindungsflansches 186 mit dem Verbindungsflansch 170 der Kontaktplatte 118 an der Kontaktplatte 118 festgelegt ist.

Die Brennstoffzelleneinheiten 114 des Brennstoffzellenblockverbunds 106 sind längs der Stapelrichtung 112 so aufeinandergestapelt, daß die kathodenseitigen Kontaktelemente 132b jeder Kontaktplatte 118 sich zu der Kathode der KAE-Einheit 116 der darunter angeordneten Brennstoffzelleneinheit 114 erstrecken und im elektrisch leitenden Kontakt an derselben anliegen.

Dabei fluchten die Brenngasdurchgangsöffnungen 142, 182 und die Abgasdurchgangsöffnungen 152, 184 längs der Stapelrichtung 112 aufeinanderfolgender Brennstoffzelleneinheiten 114 miteinander, um so die Brenngaskanäle 216 bzw. die Abgaskanäle 214 zu bilden.

Wie aus Fig. 2 zu ersehen ist, mündet an dem unterem Ende jedes Brenngaskanals 216 in denselben eine Brenngaszuführöffnung 234, welche die untere Endplatte 108 des Brennstoffzellenblockverbunds 106 koaxial zu dem jeweiligen Brenngaskanal 216 durchsetzt.

An das dem jeweiligen Brenngaskanal 216 abgewandte Ende der Brenngaszuführöffnung 234 ist eine Brenngas-Zweigleitung 236 angeschlossen, welche von einer Brenngas-Zuführleitung 238 abzweigt, die durch das Gehäuse der Brennstoffzellenvorrichtung 100 gasdicht hindurchgeführt und an eine (nicht dargestellte) Brenngaszufuhr angeschlossen ist, welche der Brenngas-Zuführleitung 238 ein Brenngas, beispielsweise ein kohlenwasserstoffhaltiges Gas oder reinen Wasserstoff, unter einem Überdruck von beispielsweise ungefähr 50 mbar zuführt.

Die Abgaskanäle 214 des Brennstoffzellenblockverbunds 106 münden an ihren oberen Enden jeweils in eine zum betreffenden Abgaskanal 214 koaxiale Abgasabführöffnung 240 (siehe Fig. 3), welche die seitliche obere Endplatte 111 durchsetzt und an ihrem dem jeweiligen Abgaskanal 214 abgewandten Ende an jeweils eine Abgas-Zweigleitung 242 angeschlossen ist.

Diese Abgas-Zweigleitungen 242 münden in eine gemeinsame Abgas-Abführleitung 244 (siehe Fig. 1), welche gasdicht durch das Gehäuse 102 der Brennstoffzellenvorrichtung 100 hindurchgeführt und an eine (nicht dargestellt) Abgasbehandlungseinheit angeschlossen ist.

Im Betrieb der Brennstoffzellenvorrichtung 100 strömt das Brenngas durch die Brenngas-Zuführleitung 238, die Brenngas-Zweigleitungen 236 und die Brenngaszuführöffnungen 234 in die beiden Brenngaskanäle 216 ein und verteilt sich von dort durch die Gasdurchtrittskanäle 210 der brenngaskanalseitigen Abstützelemente 200 auf die Brenngasräume 124 der Brennstoffzelleneinheiten 114, welche jeweils durch die Kontaktplatte 118, den Fluidführungsrahmen 120 und die KAE-Einheit 116 der betreffenden Brennstoffzelleneinheit 114 umschlossen sind.

Wie bereits beschrieben, wird das Brenngas zumindest teilweise an der den jeweiligen Brenngasraum 124 begrenzenden Anode 122 der jeweiligen KAE-Einheit 116 oxidiert.

Das Oxidationsprodukt (Wasser) gelangt zusammen mit überschüssigem Brenngas aus den Brenngasräumen 124 der Brennstoffzelleneinheiten 114 durch die Gasdurchtrittskanäle 210 der abgaskanalseitigen Abstützelemente 200 in die drei Abgaskanäle 214, aus welchen es durch die Abgasabführöffnungen 240, die Abgas-Zweigleitungen 242 und die Abgas-Abführleitung 244 zu der (nicht dargestellten) Abgasbehandlungseinheit abgeführt wird.

Dadurch, daß die Anzahl der Abgaskanäle 214 größer ist als die Anzahl der Brenngaskanäle 216, wird eine besonders gleichmäßige Durchströmung der Brenngasräume 124 zwischen den rippenförmigen Kontaktelementen 132 erzielt und der Strömungswiderstand beim Durchströmen des Kontaktfeldes 134 reduziert.

In der Abgasbehandlungseinheit wird beispielsweise das Reaktionsprodukt (Wasser) aus dem Abgasstrom entfernt, und überschüssiges Brenngas wird zu der Brenngaszufuhr geleitet, um nochmals der Brennstoffzellenvorrichtung 100 zugeführt zu werden.

Das für den Betrieb der Brennstoffzellenvorrichtung 100 benötigte Oxidationsmittel (beispielsweise Luft oder reiner Sauerstoff) wird dem Innenraum des Gehäuses 102 durch die Oxidationsmittel-Zuführleitung 104 zugeführt.

Im Innenraum des Gehäuses 102 verteilt sich das Oxidationsmittel auf die zwischen den Brenngasräumen 124 der Brennstoffzelleneinheiten 114 ausgebildeten Oxidationsmittelräume 130, welche durch jeweils eine Kontaktplatte 118 einer Brennstoffzelleneinheit 114 sowie durch den Fluidführungsrahmen 120 und die Kathode 128 der KAE-Einheit 116 einer benachbarten Brennstoffzelleneinheit 114 umschlossen sind.

In die Oxidationsmittelräume hinein und aus denselben wieder heraus gelangt das Oxidationsmittel durch die Zwischenräume zwischen jeweils einem Fluidführungsrahmen 120 einer Brennstoffzelleneinheit 114 und der Kontaktplatte 118 der in der Stapelrichtung 112 darauffolgenden Brennstoffzelleneinheit 114, soweit diese Zwischenräume nicht durch die Abstützelemente 200, welche die Brenngaskanäle 216 bzw. die Abgaskanäle 214 umgeben, überdeckt sind.

Wie bereits beschrieben, werden aus dem Oxidationsmittel an den Kathoden 128 der KAE-Einheiten 116 der Brennstoffzelleneinheiten 114 Sauerstoffionen gebildet, welche durch die Elektrolyten 126 zu den Anoden 122 der KAE-Einheiten 116 der Brennstoffzelleneinheiten 114 wandern.

Überschüssiges Oxidationsmittel gelangt aus den Oxidationsmittelräumen 130 der Brennstoffzelleneinheiten 114 auf der der Eintrittsseite des Oxidationsmittels gegenüberliegenden Seite hinaus und wird durch die Oxidationsmittel-Abführleitung 105 aus dem Innenraum des Gehäuses 102 der Brennstoffzellenvorrichtung 100 abgeführt.

Die Strömungsrichtung des Brenngases und des Abgases durch die Brennstoffzellenvorrichtung 100 ist in den Zeichnungen mit einfachen Pfeilen 246, die Strömungsrichtung des Oxidationsmittels durch die Brennstoffzellenvorrichtung 100 mittels Doppelpfeilen 248 angegeben.

Die Strömungsrichtung des Oxidationsmittels durch die Oxidationsmittelräume 130 ist im wesentlichen parallel zu der Strömungsrichtung des Brenngases durch die Brenngasräume 124.

Um die längs der Stapelrichtung 112 aufeinanderfolgenden Brennstoffzelleneinheiten 114 durch äußere Verspannung aneinander festzulegen, sind mehrere Verbindungsschrauben 250 (siehe Fig. 2 und 3) vorgesehen, welche Durchgangsbohrungen 252 in der mittleren oberen Endplatte 110 des Brennstoffzellenblockverbunds 106 durchsetzen und an ihrem dem jeweiligen Schraubenkopf 254 abgewandten Ende mit einem Außengewinde 256 versehen sind, welches in jeweils eine Gewindebohrung 258 in der unteren Endplatte 108 des Brennstoffzellenverbunds 106 eingedreht ist, so daß die mittlere obere Endplatte 110 und die untere Endplatte 108 durch die Verbindungsschrauben 250 gegeneinander verspannt werden und eine gewünschte Presskraft über die Endplatten 108, 110 auf den mittigen, die Kontaktfelder 134 umfassenden Bereich des Stapels der Brennstoffzelleneinheiten 114 übertragbar ist (siehe Fig. 2).

Ferner sind mehrere Verbindungsschrauben 260 vorgesehen, welche Durchgangsbohrungen 262 in den seitlichen oberen Endplatten 111 des Brennstoffzellenblockverbunds 106 durchsetzen und an ihrem dem jeweiligen Schraubenkopf 264 abgewandten Ende mit einem Außengewinde 266 versehen sind, welches in jeweils eine Gewindebohrung 268 in der unteren Endplatte 108 eingedreht ist, so daß die seitlichen oberen Endplatten 111 und die untere Endplatte 108 durch die Verbindungsschrauben 260 gegeneinander verspannt sind und eine gewünschte Presskraft über die Endplatten 108, 111 im Bereich der Brenngaskanäle 216 bzw. der Abgaskanäle 214 auf den Stapel der Brennstoffzelleneinheiten 114 übertragbar ist.

Die durch die äußere Verspannung mittels der Verbindungsschrauben 250 und der mittleren oberen Endplatte 110 erzeugte Presskraft bestimmt den Anpressdruck, mit dem die Kontaktelemente 132 gegen das Substrat 121 bzw. gegen die Kathode 128 der angrenzenden KAE-Einheit 116 gepreßt werden.

Der Anpressdruck, mit dem die Abstützelemente 200 und die Gaskanal-Dichtungen 212 gegen die Kontaktplatten 118 und die Fluidführungsrahmen 120 gepreßt werden, wird dagegen - unabhängig von der Verspannung mittels der Verbindungsschrauben 250 und der mittleren oberen Endplatte 110 - ausschließlich durch die äußere Vorspannkraft bestimmt, mit welcher die seitlichen oberen Endplatten 111 mittels der Verbindungsschrauben 260 gegen die untere Endplatte 108 verspannt sind.

Der vorstehend beschriebene Brennstoffzellenblockverbund 106 wird wie folgt montiert:

Zunächst werden die einzelnen Brennstoffzelleneinheiten 114 montiert, indem jeweils ein Substrat 121 mit seinem verdichteten Außenbereich 220 auf einen Fluidführungsrahmen 120 aufgelegt und in der vorstehend beschriebenen Weise durch Verschweißen oder Verlöten, unter Bildung einer gasdichten Zone 224 in dem verdichteten Außenbereich 220, an dem Fluidführungsrahmen 120 festgelegt wird. Anschließend werden auf dem Substrat 121 die Anode 122, der Elektrolyt 126 und die Kathode 128 der KAE-Einheit 116, beispielsweise durch Plasmaspritzen erzeugt, wobei der Elektrolyt 126 in der Weise erzeugt wird, daß er die gasdichte Zone 224 in dem verdichteten Außenbereich 220 des Substrats 121 gasdicht überdeckt, um die Brenngasraum-Dichtung 218 herzustellen.

Anschließend wird die Kontaktplatte 118 der Brennstoffzelleneinheit 114 zur Anlage an der der KAE-Einheit 116 abgewandten Seite des Substrats 121 gebracht, und durch Verschweißen oder Verlöten wird der Verbindungsflansch 170 der Kontaktplatte 118 mit dem Verbindungsflansch 186 des Fluidführungsrahmens 120 gasdicht verbunden.

Darauf wird der Brennstoffzellenverbund 106 aus den einzelnen Brennstoffzelleneinheiten 114 zusammengesetzt, indem die gewünschte Anzahl von Brennstoffzelleneinheiten 114 längs der Stapelrichtung 112 gestapelt wird und die Brennstoffzelleneinheiten 114 mittels der Endplatten 108, 110, 111 und der die Endplatten gegeneinander verspannenden Verbindungsschrauben 250, 260 in ihrer Lage relativ zueinander fixiert werden.

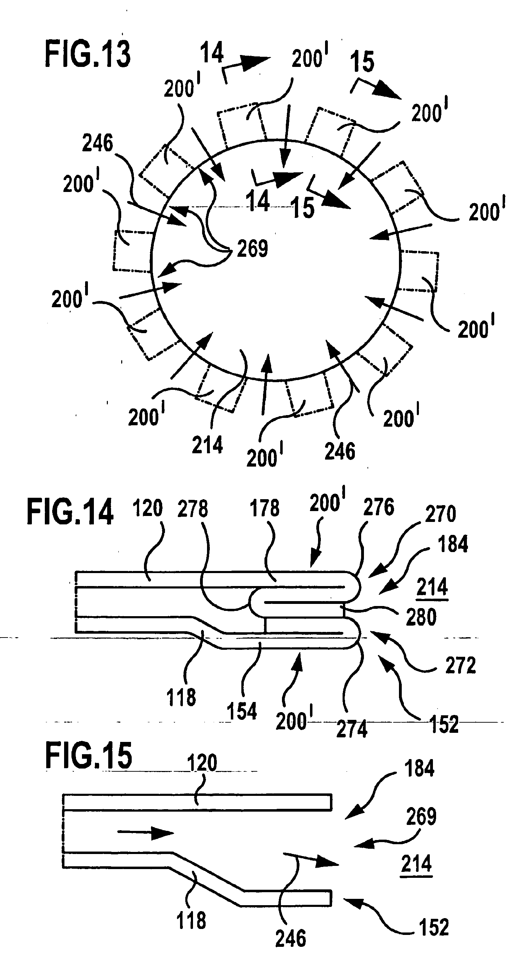

Eine in den Fig. 13 bis 15 dargestellte zweite Ausführungsform einer Brennstoffzellenvorrichtung 100 unterscheidet sich von der vorstehend beschriebenen ersten Ausführungsform lediglich dadurch, daß Abstützelemente 200', welche zwischen der Kontaktplatte 118 und dem Fluidführungsrahmen 120 derselben Brennstoffzelleneinheit 114 angeordnet sind und somit ein Kollabieren des Gehäuses 192 der Brennstoffzelleneinheit 114 unter dem Anpressdruck, unter dem die seitlichen oberen Endplatten 111 und die untere Endplatte 108 gegeneinander verspannt werden, verhindern, nicht als separate Bauteile, sondern vielmehr einstückig mit der Kontaktplatte 118 bzw. mit dem Fluidführungsrahmen 120 ausgebildet sind.

Wie aus den Fig. 13 und 14 zu ersehen ist, sind rings um jeden Abgaskanal 214 mehrere, beispielsweise zehn, Abstützelemente 200' angeordnet, welche in der Umfangsrichtung des Abgaskanals 214 voneinander beabstandet sind, so daß das Abgas aus dem Brenngasraum 124 der betreffenden Brennstoffzelleneinheit 114 durch die Gasdurchlässe 269 bildenden Zwischenräume zwischen den Abstützelementen 200' in den Abgaskanal 214 gelangen kann.

Wie am besten aus der Schnittdarstellung der Fig. 14 zu ersehen ist, umfaßt jedes der Abstützelemente 200' einen oberen Teil 270 und einen unteren Teil 272, wobei der untere Teil 272 einstückig mit der Kontaktplatte 118 ausgebildet ist und einen in die Abgasdurchgangsöffnung 152 überstehenden Randbereich der Kontaktplatte 118 umfaßt, welcher durch Umbiegen längs einer Biegelinie 274 um 180° auf den Randbereich 154 der Kontaktplatte 118 zurückgebogen worden ist.

Der obere Teil 270 des Abstützelements 200' ist einstückig mit dem Fluidführungsrahmen 120 ausgebildet und umfaßt einen in die Abgasdurchgangsöffnung 184 überstehenden Randbereich des Fluidführungsrahmens 120, welcher längs einer ersten Biegelinie 276 um 180° auf den Gasführungsbereich 178 zurückgebogen worden ist und längs einer zweiten Biegelinie 278 um 180° auf sich selbst zurückgebogen worden ist.

Der obere Teil 270 des Abstützelements 200' umfaßt somit zwei übereinander angeordnete Lagen, wobei die untere Lage 280 mit ihrer Unterseite auf der Oberseite des unteren Teils 272 des Abstützelements 200' flächig aufliegt.

Die insgesamt drei Metallblechlagen des Abstützelements 200' bilden somit einen massiven metallischen Körper, welcher durch die auf die Gaskanal-Dichtungen 212 und die Abstützelemente 200' wirkenden Presskräfte im wesentlichen nicht weiter komprimiert werden kann und somit die Kontaktplatte 118 und den Fluidführungsrahmen 120 im Bereich des Abgaskanals 214 auf Abstand voneinander hält und ein Zusammendrücken des Gehäuses 192 der Brennstoffzelleneinheit 114 verhindert.

Den vorstehend beschriebenen Abstützelementen 200' entsprechende Abstützelemente sind auch im Bereich der Brenngaskanäle 216 zwischen der Kontaktplatte 118 und dem Fluidführungsrahmen 120 derselben Brennstoffzelleneinheit 114 angeordnet.

Im übrigen stimmt die zweite Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

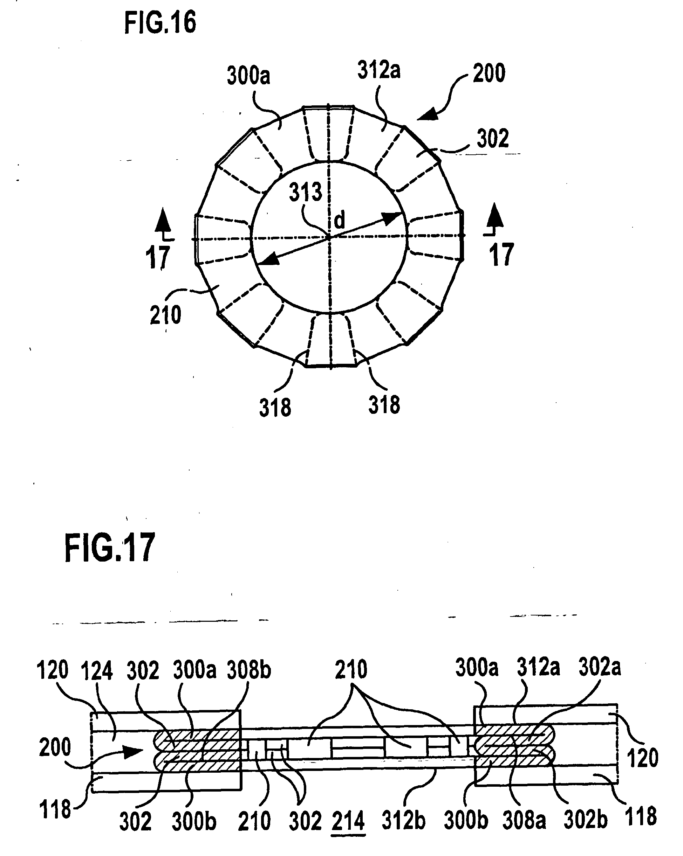

Ein in den Fig. 16 bis 18 dargestellte dritte Ausführungsform einer Brennstoffzellenvorrichtung 100 unterscheidet sich von der vorstehend beschriebenen ersten Ausführungsform lediglich dadurch, daß die Abstützelemente 200, welche zwischen der Kontaktplatte 118 und dem Fluidführungsrahmen 120 derselben Brennstoffzelleneinheit 114 angeordnet sind und somit ein Kollabieren des Gehäuses 192 der Brennstoffzelleneinheit 114 unter dem Anpreßdruck, unter dem die seitlichen oberen Endplatten 111 und die untere Endplatte 108 gegeneinander verspannt werden, verhindern, nicht als massive Abstützelemente mit im wesentlichen zylindrischen, radial ausgerichteten Gasdurchtrittskanälen ausgebildet sind, sondern aus ringförmigen Trägerelementen 100 und einstückig mit den Trägerelementen ausgebildeten Laschen 302, welche vor der Montage des jeweiligen Abstützelements 200 auf eine Oberfläche des angrenzenden Trägerelements 300 umgefaltet werden, gebildet sind.

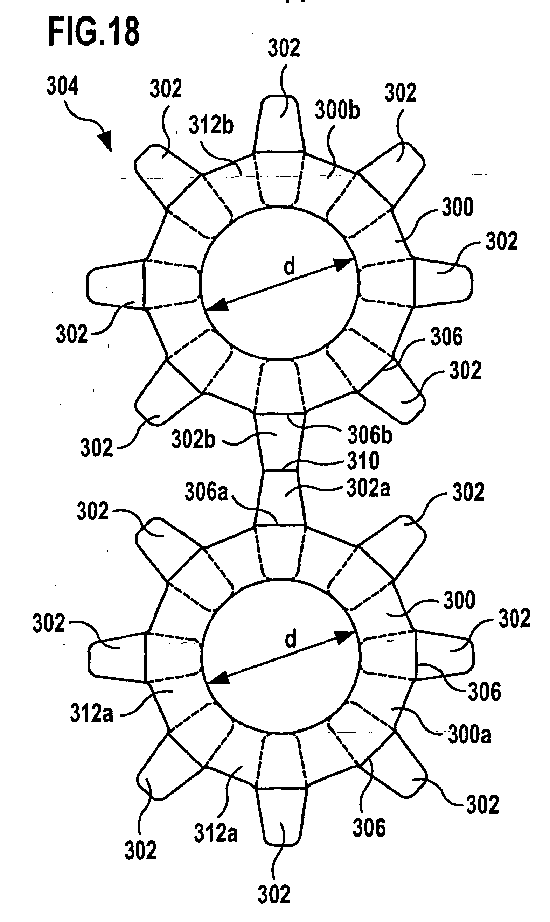

Ein solches Abstützelement 200 wird aus der in Fig. 18 dargestellten, im wesentlichen ebenen Abstützelement-Vorform 304 gebildet, welche aus einem Ausgangsmaterial, beispielsweise aus einem metallischen Material, vorzugsweise aus einem Stahlblech, ausgestanzt oder ausgeschnitten wird.

Die Abstützelement-Vorform 304 umfaßt zwei im wesentlichen kreisringförmige Trägerelemente 300, deren Ringinnendurchmesser d jeweils dem Durchmesser einer der Brenngasdurchgangsöffnungen 142, 182 oder einer der Abgasdurchgangsöffnungen 152, 184 entspricht, je nachdem, ob das aus der Vorform herzustellende Abstützelement 200 an einem Brenngaskanal 216 oder an einem Abgaskanal 214 angeordnet werden soll.

Von der Ringaußenseite jedes Trägerelements 300 stehen mehrere, beispielsweise jeweils acht, Laschen 302 radial nach außen ab. Wie aus Fig. 18 zu ersehen ist, verjüngen sich die Laschen 302 zu ihrem dem Trägerelement 300 abgewandten freien Ende hin.

Ferner sind einander benachbarte Laschen 302 längs des Umfangs des Trägerelements 300 voneinander beabstandet.

Eine der Laschen 302a des ersten Trägerelements 300a ist an ihrem dem Trägerelement 300a abgewandten Ende mit dem dem zweiten Trägerelement 300b abgewandten Ende einer Lasche 302b des zweiten Trägerelements 300b verbunden, so daß die aus den Trägerelementen 300 und Laschen 302 gebildete Abstützelement-Vorform 304 insgesamt einstückig ausgebildet ist.

Vor der Montage der Brennstoffzelleneinheit 114 wird durch Biege- oder Faltvorgänge aus der in Fig. 18 dargestellten Abstützelement-Vorform 304 das in den Fig. 16 und 17 dargestellte fertige Abstützelement 200 gebildet.

Hierzu werden die Laschen 302 des ersten Trägerelements 300a längs der tangential zum äußeren Rand des Trägerelements verlaufenden Biegelinien 306, an denen diese Laschen an das erste Trägerelement 300a angrenzen, um einen Winkel von ungefähr 180° nach unten umgebogen und auf die Unterseite 308a des ersten Trägerelements 300a zurückgefaltet.

Ebenso werden die Laschen 302 des zweiten Trägerelements 300b längs der Biegelinien 306, an welchen diese Laschen an das zweite Trägerelement 300b angrenzen, um einen Winkel von ungefähr 180° nach unten umgebogen und auf die Unterseite 308b des zweiten Trägerelements 300b zurückgefaltet.

Anschließend wird die Lasche 302a des ersten Trägerelements 300a um die Biegelinie 306a, an welcher die Lasche 302a an das erste Trägerelement 300a angrenzt, um einen Winkel von ungefähr 180° nach unten umgebogen und auf die Unterseite 308a des ersten Trägerelements 300a zurückgefaltet, wobei auch die Lasche 302b und das zweite Trägerelement 300b um ungefähr 180° gedreht werden.

Anschließend wird die Lasche 302b längs der Biegelinie 310, an welcher die Lasche 302b an die Lasche 306a angrenzt, um einen Winkel von ungefähr 180° gebogen und auf die Lasche 302a zurückgefaltet, wobei auch das zweite Trägerelement 300b um einen Winkel von ungefähr 180° gedreht wird.

Schließlich wird das zweite Trägerelement 300b um die Biegelinie 306b, an welcher das zweite Trägerelement 300b an die Lasche 302b angrenzt, um einen Winkel von ungefähr 180° nach unten gebogen und auf die Lasche 302b zurückgefaltet, so daß das zweite Trägerelement 300b senkrecht unter dem ersten Trägerelement 300a zu liegen kommt und die Laschen 302 beider Trägerelemente 300 zwischen denselben angeordnet sind, wie in Fig. 17 dargestellt.

In diesem montierten Zustand des Abstützelements 200 verlaufen die Seitenränder 318 der Laschen 302 im wesentlichen radial zur Mittelachse 313 des Abstützelements 200.

Wie aus den Fig. 16 und 17 zu ersehen ist, sind zwischen den aneinander anliegenden Laschen 302 der Trägerelemente 300 Gasdurchtrittskanäle 210 mit im wesentlichen rechteckigem, sich zu der Außenseite des Abstützelements 200 hin erweiternden Querschnitten ausgebildet, deren Höhe der Summe der Höhen zwei aneinander anliegenden Laschen 302 und deren Breite dem Abstand zweier benachbarten Laschen 302 längs der Umfangsrichtung der Trägerelemente 300 entspricht.

Die so gebildeten ringförmigen Abstützelemente 200 werden bei der Montage einer Brennstoffzelleneinheit im Bereich der Brenngasdurchgangsöffnungen 142, 182 bzw. im Bereich der Abgasdurchgangsöffnungen 152, 184 so zwischen der Kontaktplatte 118 und dem Fluidführungsrahmen 120 eines Gehäuses 192 einer Brennstoffzelleneinheit 114 angeordnet, daß die einander abgewandten Oberseiten 312a, 312b der Trägerelemente 300a bzw. 300b an der Oberseite der Kontaktplatte 118 bzw. an der Unterseite des Fluidführungsrahmens 120 anliegen.

Dadurch, daß die Laschen 302 eines Trägerelements 300 flächig an den Laschen 302 eines benachbarten Trägerelements 300 des Abstützelements 200 anliegen und daß die Laschen 302 jeweils flächig an einem der Trägerelemente 300 anliegen, wird eine möglichst homogene Dichtpressungsverteilung an dem Abstützelement 200 im eingebauten Zustand erzielt.

Die Gaskanäle 210, die zwischen den Laschen 302 ausgebildet sind, ermöglichen einen Gasaustausch zwischen der Ringinnenseite und der Ringaußenseite des Abstützelements 200 mit einem nur geringen Strömungswiderstand.

Durch die Wahl der Dicke des Ausgangsmaterials, aus dem die Abstützelement-Vorform 304 ausgestanzt oder ausgeschnitten wird, kann die Gesamthöhe des fertigen Abstützelements 200 auf jeden gewünschten Wert eingestellt werden.

Ferner wäre es auch möglich, die Laschen 302 jeweils mehrfach zu falten, um so eine höhere Einbaudicke des Abstützelements 200 zu erzielen.

Außerdem könnten auch mehrere Trägerelemente 300, die nicht einstückig miteinander verbunden sind, übereinander angeordnet werden, um das Abstützelement 200 zu bilden.

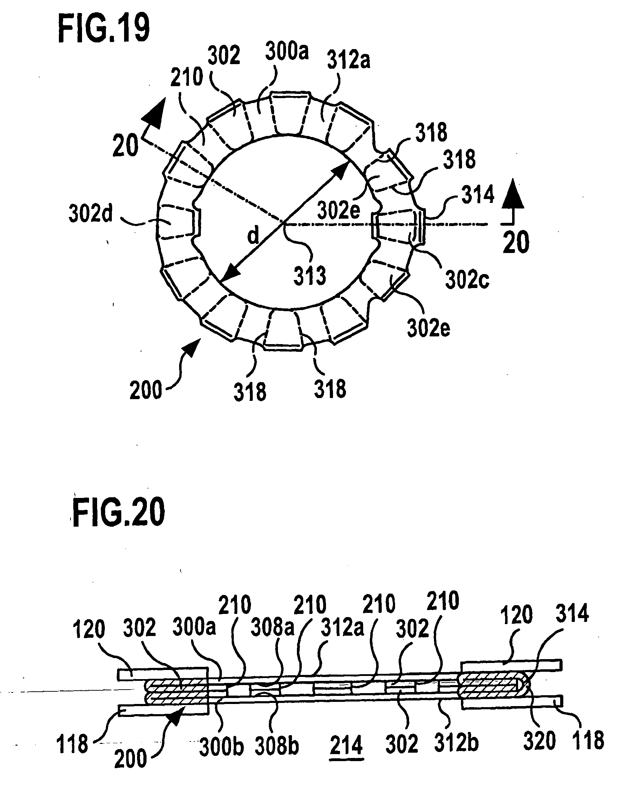

Eine alternative Ausführungsform eines Abstützelements 200 ist in den Fig. 19 bis 21 dargestellt.

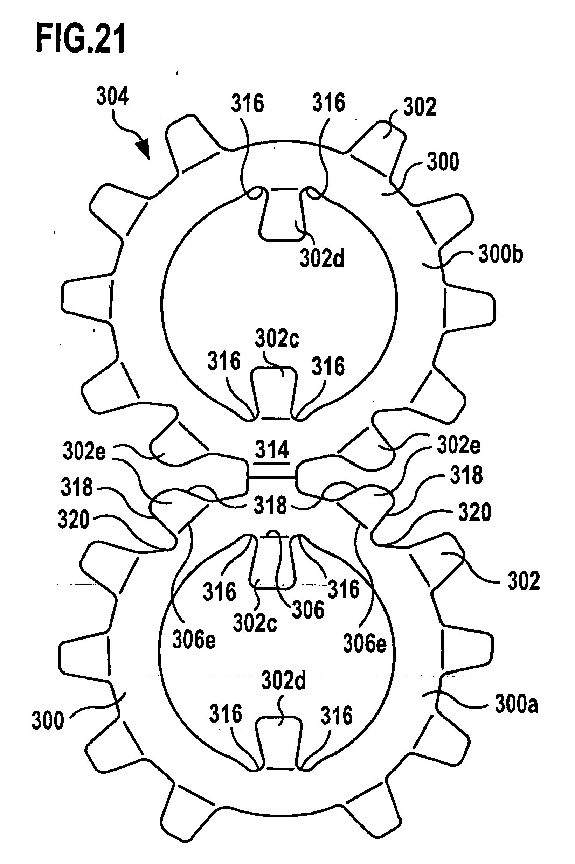

Wie am besten aus der in Fig. 21 dargestellten Draufsicht auf die aus einer Lage des Ausgangsmaterials ausgestanzte oder ausgeschnittene Abstützelement-Vorform 304 zu ersehen ist, umfaßt auch diese alternative Ausführungsform zwei im wesentlichen kreisringförmige Trägerelemente 300a, 300b, welche an ihrer Ringaußenseite jeweils mit mehreren, beispielsweise mit jeweils zehn, Laschen 302 versehen sind.

Ferner sind die Ringaußenseiten der Trägerelemente 300a, 300b über einen radial zu beiden Trägerelementen ausgerichteten Stegbereich 314 miteinander verbunden.

An der dem Stegbereich 314 gegenüberliegenden Stelle der Ringinnenseite jedes Trägerelements 300a, 300b ist jeweils eine innere Lasche 302c vorgesehen, welche sich von ihrem dem jeweiligen Trägerelement 300a, 300b abgewandten freien Ende her zu dem jeweiligen Trägerelement 300a, 300b hin verjüngt.

Zu beiden Seiten der inneren Lasche 302c ist jeweils eine Ausnehmung 316 an der Ringinnenseite des betreffenden Trägerelements 300a, 300b vorgesehen, in welche jeweils ein Ende der Biegelinie 306 der inneren Lasche 302c mündet. Auf diese Weise ist die Biegelinie der inneren Lasche 302c freigeschnitten, so daß die innere Lasche 302c um die Biegelinie 306 gebogen und auf das betreffende Trägerelement 300a, 300b zurückgefaltet werden kann.

An der der inneren Lasche 302c an der Ringinnenseite des Trägerelements 300a, 300b diametral gegenüberliegenden Stelle der Ringinnenseite ist jeweils eine weitere innere Lasche 302d vorgesehen, welche (bezogen auf die Mittelachse des jeweiligen Trägerelements 300a, 300b) symmetrisch zu der ersten inneren Lasche 302c ausgebildet und angeordnet ist.

Um zu vermeiden, daß die beiden dem Stegbereich 314 benachbarten äußeren Laschen 302e des einen Trägerelements die entsprechenden äußeren Laschen 302e des anderen Trägerelements berühren, sind diese äußeren Laschen 302e nicht genau radial zur Mittelachse des jeweiligen Trägerelements 300a, 300b ausgerichtet, sondern gegenüber der radialen Richtung von dem Stegbereich 314 weg verkippt. Um zu erreichen, daß nach dem Zurückfalten dieser äußeren Laschen 302e auf das jeweilige Trägerelement 300a, 300b die Seitenränder 318 der äußeren Laschen 302e radial zur Mittelachse des Abstützelements 200 verlaufen, verlaufen die Biegelinien 306e, um welche die äußeren Laschen 302e gefaltet werden, nicht senkrecht zur Radialrichtung des jeweiligen Trägerelements 300a, 300b, sondern unter einem spitzen Winkel zur Tangentialrichtung an der Ringaußenseite des betreffenden Trägerelements.

Um die Faltung der äußeren Lasche 302e um diese nicht tangential zum Trägerelement 300a bzw. 300b ausgerichtete Biegelinie 306e zu ermöglichen, ist zwischen der äußeren Lasche 302e und der derselben auf der dem Stegbereich 314 abgewandten Seite benachbarten äußeren Lasche 302 eine Ausnehmung 320 an der Ringaußenseite des betreffenden Trägerelements vorgesehen, in welche die Biegelinie 306e mündet.

Um das Abstützelement 200 aus der in Fig. 21 dargestellten Abstützelement-Vorform 304 zu bilden, werden zunächst sämtliche Laschen 302, 302c, 302d, 302e um ihre jeweiligen Biegelinien um einen Winkel von ungefähr 180° umgebogen und auf die Unterseite 308a, 308b des jeweiligen Trägerelements 300a, 300b zurückgefaltet.

Anschließend wird der Stegbereich 314 zwischen den beiden Trägerelementen so gebogen, daß er einen Bogen 320 mit U-förmigem Querschnitt bildet (siehe Fig. 20), wodurch das zweite Trägerelement 300b mit den daran angeordneten Laschen 302 senkrecht unter das erste Trägerelement 300a bewegt wird.

Damit ist die in den Fig. 19 und 20 dargestellte Endkonfiguration des Abstützelements 200 erreicht, in der die Unterseiten 308a, 308b der beiden Trägerelemente 300a, 300b einander zugewandt sind, die an den Trägerelementen angeordneten Laschen 302, 302c, 302d, 302e zwischen den Trägerelementen 300a, 300b angeordnet sind und flächig an dem jeweiligen Trägerelement sowie flächig an jeweils einer Lasche des jeweils anderen Trägerelements anliegen.

Zwischen einander benachbarten Laschenstapeln sind die radialen Gaskanäle 210 des Abstützelements 200 ausgebildet.

Im übrigen stimmt diese alternative Ausführungsform eines Abstützelements mit der in den Fig. 16 bis 18 dargestellten Ausführungsform überein, auf deren vorstehende Beschreibung insoweit Bezug genommen wird.

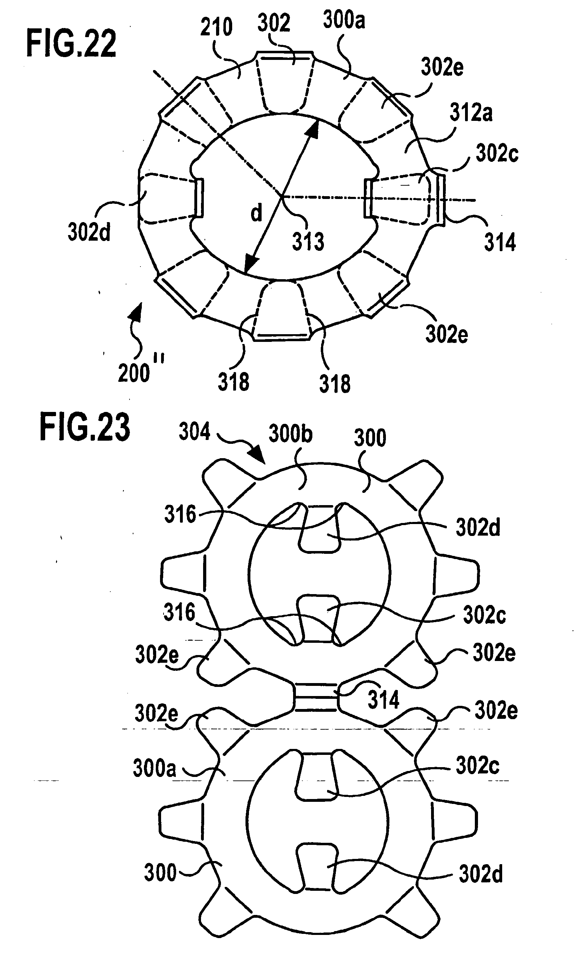

Eine weitere, in den Fig. 22 und 23 dargestellte Ausführungsform eines Abstützelements 200" unterscheidet sich von der in den Fig. 19 bis 21 dargestellten Ausführungsform lediglich dadurch, daß die Trägerelemente 300a, 300b bei dieser weiteren Ausführungsform einen kleineren Ringinnendurchmesser und einen kleineren Ringaußendurchmesser aufweisen. Ferner sind an jedem Trägerelement 300 bei dieser weiteren Ausführungsform nur sechs statt zehn äußere Laschen 302 angeordnet.

Da auch die dem Stegbereich 314 zwischen den Trägerelementen 300 benachbarten äußeren Laschen 302e einen größeren Winkelabstand von dem Stegbereich 314 aufweisen als bei der vorstehend beschriebenen Ausführungsform, können auch diese äußeren Laschen 302e im wesentlichen radial zur Mittelachse des betreffenden Trägerelements 300 ausgerichtet sein, so daß es sich erübrigt, an der Ringaußenseite der Trägerelemente 300 eine Ausnehmung 320 vorzusehen.

Im übrigen stimmt die in den Fig. 22 und 23 dargestellte Ausführungsform eines Abstützelements 200" hinsichtlich Aufbau und Funktion mit der in den Fig. 19 bis 21 dargestellten Ausführungsform überein, auf deren vorstehende Beschreibung insoweit Bezug genommen wird.

Um die Herstellung des Gehäuses 192 einer Brennstoffzelleneinheit 114 zu vereinfachen und Material einzusparen, kann vorgesehen sein, daß die vorstehend beschriebenen Abstützelemente 200, 200" einstückig mit einer der beiden Gehäusewände, das heißt mit der Kontaktplatte 118 oder mit dem Fluidführungsrahmen 120, verbunden ist.

Zu diesem Zweck wird die Abstützelement-Vorform 304 des betreffenden Abstützelements über einen Steg 322 mit dem betreffenden Gehäuseteil verbunden.

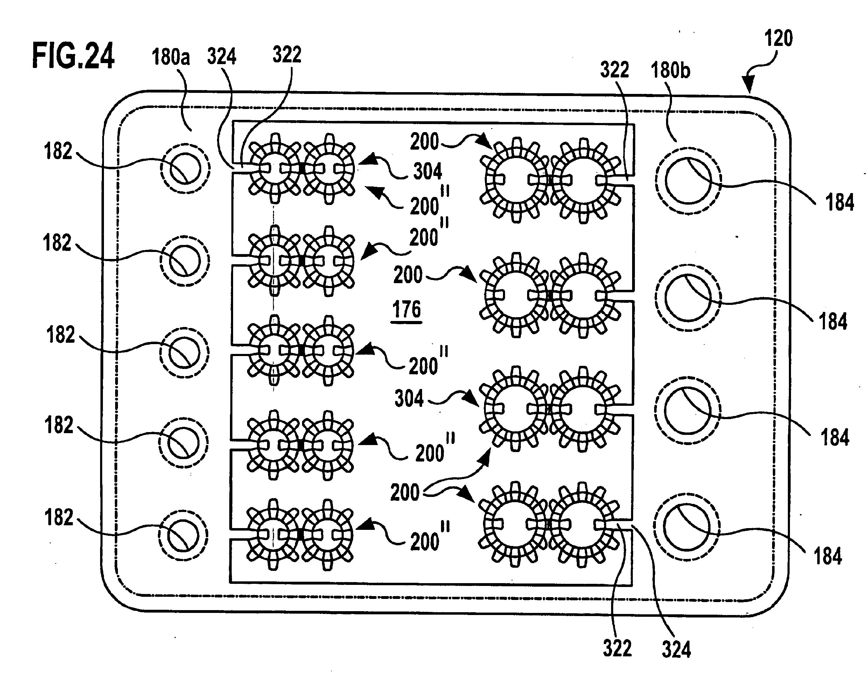

In Fig. 24 ist beispielsweise ein Fluidführungsrahmen 120 dargestellt, welcher in seinem linken Seitenbereich 180a fünf Brenngasdurchgangsöffnungen 182 mit einem Durchmesser d₁ und in seinem rechten Seitenbereich 180b vier Abgasdurchgangsöffnungen 184 mit einem Durchmesser d₂ aufweist, wobei der Durchmesser d₂ größer ist als der Durchmesser d₁.

Im Bereich der mittigen Durchtrittsöffnung 176 des Fluidführungsrahmens 120 sind die Abstützelement-Vorformen 304 von fünf Abstützelementen 200" für die Brenngasdurchgangsöffnungen 182 und von vier Abstützelementen 200 für die Abgasdurchgangsöffnungen 184 angeordnet, welche mit den Seitenbereichen 180a bzw. 180b des Fluidführungsrahmens 120 mittels Stegen 322 einstückig verbunden sind.

Die Länge eines Steges 322 entspricht dabei dem Abstand zwischen der jeweiligen Brenngasdurchgangsöffnung 182 bzw. Abgasdurchgangsöffnung 184 von der Durchtrittsöffnung 176, abzüglich der Ringbreite der Trägerelemente 300 des betreffenden Abstützelements 200" bzw. 200.

Die Abstützelement-Vorformen 304 werden zusammen mit dem Fluidführungsrahmen 120 aus einer Lage des Ausgangsmaterials, beispielsweise aus einem Stahlblech, ausgestanzt oder ausgeschnitten.

Anschließend werden die Abstützelemente 200" bzw. 200 in der vorstehend beschriebenen Weise durch Biege- und Faltvorgänge aus den Abstützelement-Vorformen 304 erzeugt.

Schließlich werden die so erzeugten Abstützelemente 200" bzw. 200 durch Umklappen der Stege 322 um deren längs der Ränder der Durchtrittsöffnung 176 verlaufende Biegelinien 324 um einen Winkel von ungefähr 180° in ihre Endlage gebracht, in welcher die Abstützelemente 200", 200 koaxial zu der jeweils zugeordneten Brenngasdurchgangsöffnung 182 bzw. Abgasdurchgangsöffnung 184 angeordnet sind (diese Endlage ist in Fig. 24 durch die gestrichelten Kreislinien angedeutet, welche die Brenngasdurchgangsöffnungen 182 bzw. die Abgasdurchgangsöffnungen 184 konzentrisch umgeben).

Durch das Anhängen der Abstützelement-Vorformen 304 an eines der Gehäuseteile des Gehäuses 192 einer Brennstoffzelleneinheit 114 ist es möglich, die Abstützelemente 200" bzw. 200 alleine durch Stanz- und Biegearbeitsgänge in einem Folgeverbundwerkzeug herzustellen und unverlierbar an der richtigen Position im Bereich der Brenngaskanäle bzw. Abgaskanäle anzuordnen, ohne daß irgendwelche Elemente separat von dem Gehäuseteil hergestellt und anschließend mit dem Gehäuseteil verbunden werden müssen.

Wie vorstehend bereits ausgeführt, ist es aber auch möglich, die Abstützelemente 200" bzw. 200 aus getrennt von den Gehäuseteilen ausgestanzten Abstützelement-Vorformen herzustellen, welche jeweils eines oder auch mehrere zusammenhängende Trägerelemente 300 umfassen können.

## Patentansprüche

1. Brennstoffzelleneinheit, umfassend ein Gehäuse (192), das mindestens einen Gasraum (124) begrenzt und eine Gasdurchgangsöffnung (142, 152) in einer ersten Gehäusewand (118) und eine Gasdurchgangsöffnung (182, 184) in einer der ersten Gehäusewand (118) gegenüberliegenden zweiten Gehäusewand (120) aufweist,
wobei die Brennstoffzelleneinheit (114) mindestens ein Abstützelement (200; 200") umfasst, das zwischen der ersten Gehäusewand (118) und der zweiten Gehäusewand (120) angeordnet ist und die beiden Gehäusewände (118, 120) auf Abstand voneinander hält,
wobei das Abstützelement (200; 200") mindestens ein Trägerelement (300) und mindestens eine einstückig mit dem Trägerelement (300) ausgebildete Lasche (302) umfasst, die im montierten Zustand des Abstützelements (200; 200") aus der Ebene des Trägerelements (300) herausgebogen ist,
**dadurch gekennzeichnet,**
**dass** das Trägerelement (300) als ein geschlossener Ring ausgebildet ist und dass die Lasche (302) an dem Trägerelement (300) anliegt.

2. Brennstoffzelleneinheit nach Anspruch 1, **dadurch gekennzeichnet, dass** das Abstützelement (200; 200") ringförmig geschlossen ausgebildet ist und mit Gasdurchtrittsöffnungen (210) versehen ist.

3. Brennstoffzelleneinheit nach einem der Ansprüche 1 oder 2, **dadurch gekennzeichnet, dass** das Abstützelement (200; 200") mindestens zwei Kanalbegrenzungselemente (203) umfasst, zwischen denen ein Gasdurchtrittskanal (210) des Abstützelements (200; 200") ausgebildet ist, und mindestens ein Trägerelement (300), an dem die Kanalbegrenzungselemente (302) im montierten Zustand des Abstützelements (200; 200") anliegen und das den Gasdurchtrittskanal (210) berandet.

4. Brennstoffzelleneinheit nach einem der Ansprüche 1 bis 3, **dadurch gekennzeichnet, dass** das Trägerelement (300) als eine im wesentlichen ebene Platte ausgebildet ist.

5. Brennstoffzelleneinheit nach einem der Ansprüche 1 bis 4, **dadurch gekennzeichnet, dass** die mindestens eine Lasche (302) im montierten Zustand des Abstützelements (200; 200") eine Gasdurchtrittsöffnung (210) des Abstützelements (200; 200") berandet.

6. Brennstoffzelleneinheit nach einem der Ansprüche 1 bis 5, **dadurch gekennzeichnet, dass** das mindestens eine Trägerelement (300) mit mehreren Laschen (302) versehen ist.

7. Brennstoffzelleneinheit nach einem der Ansprüche 1 bis 6, **dadurch gekennzeichnet, dass** mindestens eine Lasche (302c, 302d) an der Ringinnenseite des Trägerelements (300) angeordnet ist.

8. Brennstoffzelleneinheit nach einem der Ansprüche 1 bis 7, **dadurch gekennzeichnet, dass** mindestens eine Lasche (302, 302a, 302b; 302e) an der Ringaußenseite des Trägerelements (300) angeordnet ist.

9. Brennstoffzelleneinheit nach einem der Ansprüche 1 bis 8, **dadurch gekennzeichnet, dass** das Abstützelement (200; 200") mindestens zwei Trägerelemente (300a, 300b) umfasst.

10. Brennstoffzelleneinheit nach Anspruch 9, **dadurch gekennzeichnet, dass** die mindestens zwei Trägerelemente (300a, 300b) einstückig miteinander verbunden sind.

11. Brennstoffzelleneinheit nach Anspruch 10, **dadurch gekennzeichnet, dass** die mindestens zwei Trägerelemente (300a, 300b) über einen im montierten Zustand des Abstützelements (200; 200") gebogenen Bereich (314) miteinander verbunden sind.

12. Brennstoffzelleneinheit nach einem der Ansprüche 10 oder 11, **dadurch gekennzeichnet, dass** das Abstützelement (200; 200") ein erstes Trägerelement (300a) mit einer ersten Lasche (302a) und ein zweites Trägerelement (300b) mit einer zweiten Lasche (302b) umfasst, wobei die erste Lasche (302a) und die zweite Lasche (302b) aneinander angrenzen.

13. Brennstoffzelleneinheit nach einem der Ansprüche 9 bis 12, **dadurch gekennzeichnet, dass** die Laschen (302) von mindestens zwei Trägerelementen (300) im montierten Zustand des Abstützelements (200; 200") aneinander anliegen.

14. Brennstoffzelleneinheit nach einem der Ansprüche 1 bis 13, **dadurch gekennzeichnet, dass** mindestens ein Trägerelement (300) einstückig mit einer der Gehäusewände (118, 120) ausgebildet ist.

15. Brennstoffzelleneinheit nach einem der Ansprüche 1 bis 14, **dadurch gekennzeichnet, dass** das Abstützelement (200; 200") als von den Gehäusewänden (118, 120) separates Teil ausgebildet ist.

16. Brennstoffzelleneinheit nach einem der Ansprüche 1 bis 15, **dadurch gekennzeichnet, dass** das Abstützelement (200; 200") ein metallisches Material umfasst.

17. Brennstoffzelleneinheit nach einem der Ansprüche 1 bis 16, **dadurch gekennzeichnet, dass** zumindest ein Teil (300) des Abstützelements (200; 200") einstückig mit der ersten Gehäusewand (118) ausgebildet ist.

18. Brennstoffzelleneinheit nach einem der Ansprüche 1 bis 17, **dadurch gekennzeichnet, dass** zumindest ein Teil (300) des Abstützelements (200; 200") einstückig mit der zweiten Gehäusewand (120) ausgebildet ist.

19. Brennstoffzellenblockverbund, umfassend eine Mehrzahl von Brennstoffzelleneinheiten (114) nach einem der Ansprüche 1 bis 18, die längs einer Stapelrichtung (112) aufeinanderfolgen.

20. Brennstoffzellenblockverbund nach Anspruch 19, umfassend eine Spanneinrichtung, mit welcher die die Gasdurchgangsöffnungen (142, 152, 182, 184) aufweisenden Bereiche der Gehäuse (192) der Brennstoffzelleneinheiten (114) gegeneinander verspannbar sind.

21. Brennstoffzellenblockverbund nach Anspruch 20, umfassend eine weitere Spanneinrichtung, mit welcher weitere Bereiche der Gehäuse (192) der Brennstoffzelleneinheiten (114) unabhängig von der Verspannung der die Gasdurchgangsöffnungen (142, 152, 182, 184) aufweisenden Bereiche der Brennstoffzelleneinheiten (114) gegeneinander verspannbar sind.

22. Brennstoffzellenblockverbund nach Anspruch 21, **dadurch gekennzeichnet, dass** mittels der weiteren Spanneinrichtung (110, 250) Kathoden-Anoden-Elektrolyt-Einheiten (114) und Kontaktplatten (118), die mit den Kathoden-Anoden-Elektrolyt-Einheiten (114) in elektrisch leitendem Kontakt stehen, gegeneinander verspannbar sind.

## Claims

1. Fuel cell unit, comprising a housing (192) limiting at least one gas chamber (124) and having a gas opening (142, 152) in a first housing wall (118) and a gas opening (182, 184) in a second housing wall (120) located opposite the first housing wall (118),
wherein the fuel cell unit (114) comprises at least one supporting element (200; 200") arranged between the first housing wall (118) and the second housing wall (120) and keeping the two housing walls (118, 120) at a distance from one another,
wherein the supporting element (200; 200") comprises at least one carrier element (300) and at least one tongue (302) formed in one piece with the carrier element (300), said tongue being bent out of the plane of the carrier element (300) in the assembled state of the supporting element (200; 200"),
**characterized in that** the carrier element (300) is designed as a closed ring and that the tongue (302) abuts on the carrier element (300).

2. Fuel cell unit as defined in claim 1, **characterized in that** the supporting element (200; 200") is designed so as to be closed in the shape of a ring and is provided with gas openings (210).

3. Fuel cell unit as defined in either one of claims 1 or 2, **characterized in that** the supporting element (200; 200") comprises at least two channel limiting elements (203), a gas channel (210) of the supporting element (200; 200") being formed between said channel limiting elements, and at least one carrier element (300), the channel limiting elements (302) abutting on said carrier element in the assembled state of the supporting element (200; 200") and said carrier element forming the edge of the gas channel (210).

4. Fuel cell unit as defined in any one of claims 1 to 3, **characterized in that** the carrier element (300) is designed as an essentially flat plate.

5. Fuel cell unit as defined in any one of claims 1 to 4, **characterized in that** the at least one tongue (302) forms the edge of a gas opening (210) of the supporting element (200; 200") in the assembled state of the supporting element (200; 200").

6. Fuel cell unit as defined in any one of claims 1 to 5, **characterized in that** the at least one carrier element (300) is provided with several tongues (302).

7. Fuel cell unit as defined in any one of claims 1 to 6, **characterized in that** at least one tongue (302c, 302d) is arranged on the inner ring side of the carrier element (300).

8. Fuel cell unit as defined in any one of claims 1 to 7, **characterized in that** at least one tongue (302, 302a, 302b; 302e) is arranged on the outer ring side of the carrier element (300).

9. Fuel cell unit as defined in any one of claims 1 to 8, **characterized in that** the supporting element (200; 200") comprises at least two carrier elements (300a, 300b).

10. Fuel cell unit as defined in claim 9, **characterized in that** the at least two carrier elements (300a, 300b) are connected to one another in one piece.

11. Fuel cell unit as defined in claim 10, **characterized in that** the at least two carrier elements (300a, 300b) are connected to one another via an area (314) bent in the assembled state of the supporting element (200; 200").

12. Fuel cell unit as defined in either one of claims 10 or 11, **characterized in that** the supporting element (200; 200") comprises a first carrier element (300a) with a first tongue (302a) and a second carrier element (300b) with a second tongue (302b), wherein the first tongue (320a) and the second tongue (302b) border on one another.

13. Fuel cell unit as defined in any one of claims 9 to 12, **characterized in that** the tongues (302) of at least two carrier elements (300) abut on one another in the assembled state of the supporting element (200; 200").

14. Fuel cell unit as defined in any one of claims 1 to 13, **characterized in that** at least one carrier element (300) is formed in one piece with one of the housing walls (118, 120).

15. Fuel cell unit as defined in any one of claims 1 to 14, **characterized in that** the supporting element (200; 200") is designed as a part separate from the housing walls (118, 120).

16. Fuel cell unit as defined in any one of claims 1 to 15, **characterized in that** the supporting element (200; 200") comprises a metallic material.

17. Fuel cell unit as defined in any one of claims 1 to 16, **characterized in that** at least one part (300) of the supporting element (200; 200") is formed in one piece with the first housing wall (118).

18. Fuel cell unit as defined in any one of claims 1 to 17, **characterized in that** at least one part (300) of the supporting element (200; 200") is formed in one piece with the second housing wall (120).

19. Fuel cell stack assembly, comprising a plurality of fuel cell units (114) as defined in any one of claims 1 to 18, said fuel cell units following one another along a stacking direction (112).

20. Fuel cell stack assembly as defined in claim 19, comprising a tensioning device for tensioning the areas of the housing (192) of the fuel cell units (114) having the gas openings (142, 152, 182, 184) towards one another.

21. Fuel cell stack assembly as defined in claim 20, comprising an additional tensioning device for tensioning additional areas of the housing (192) of the fuel cell units (114) towards one another independently of the tensioning of the areas of the fuel cell units (114) having the gas openings (142, 152, 182, 184).

22. Fuel cell stack assembly as defined in claim 21, **characterized in that** cathode-anode-electrolyte units (114) and contact plates (118) are adapted to be tensioned towards one another by means of the additional tensioning device (110, 250), said contact plates being in electrically conductive contact with the cathode-anode-electrolyte units (114).

## Revendications

1. Unité de pile à combustible comportant un boîtier (192) qui délimite au moins un espace gazeux (124) et présente une ouverture de passage de gaz (142, 152) dans une première paroi de boîtier (118) et une ouverture de passage de gaz (182, 184) dans une seconde paroi de boîtier (120) opposée à la première paroi de boîtier (118),
l'unité de pile à combustible (114) comportant au moins un élément d'appui (200 ; 200") qui est disposé entre la première paroi de boîtier (118) et la seconde paroi de boîtier (120) et maintient les deux parois de boîtier (118, 120) à distance l'une de l'autre,
l'élément d'appui (200 ; 200") comportant au moins un élément porteur (300) et au moins une languette (302) réalisée d'un seul tenant avec l'élément porteur (300) qui est pliée à l'état monté de l'élément d'appui (200 ; 200") hors du plan de l'élément porteur (300),
**caractérisée en ce que** l'élément porteur (300) est réalisé comme un anneau fermé et **en ce que** la languette (302) repose sur l'élément porteur (300).

2. Unité de pile à combustible selon la revendication 1, **caractérisée en ce que** l'élément d'appui (200 ; 200") est réalisé fermé comme un anneau et est pourvu d'ouvertures de passage de gaz (210).

3. Unité de pile à combustible selon l'une quelconque des revendications 1 ou 2, **caractérisée en ce que** l'élément d'appui (200 ; 200") comporte au moins deux éléments de délimitation de canal (203), entre lesquels est réalisé un canal de passage de gaz (210) de l'élément d'appui (200 ; 200"), et au moins un élément porteur (300), sur lequel reposent les éléments de délimitation de canal (302) à l'état monté de l'élément d'appui (200 ; 200") et qui borde le canal de passage de gaz (210).

4. Unité de pile à combustible selon l'une quelconque des revendications 1 à 3, **caractérisée en ce que** l'élément porteur (300) est réalisé comme une plaque essentiellement plane.

5. Unité de pile à combustible selon l'une quelconque des revendications 1 à 4, **caractérisée en ce que** l'au moins une languette (302) borde à l'état monté de l'élément d'appui (200 ; 200") une ouverture de passage de gaz (210) de l'élément d'appui (200 ; 200").

6. Unité de pile à combustible selon l'une quelconque des revendications 1 à 5, **caractérisée en ce que** l'au moins un élément porteur (300) est pourvu de plusieurs languettes (302).

7. Unité de pile à combustible selon l'une quelconque des revendications 1 à 6, **caractérisée en ce qu'**au moins une languette (302c, 302d) est disposée sur le côté intérieur annulaire de l'élément porteur (300).

8. Unité de pile à combustible selon l'une quelconque des revendications 1 à 7, **caractérisée en ce qu'**au moins une languette (302, 302a, 302b ; 302e) est disposée sur le côté extérieur annulaire de l'élément porteur (300).

9. Unité de pile à combustible selon l'une quelconque des revendications 1 à 8, **caractérisée en ce que** l'élément d'appui (200 ; 200") comporte au moins deux éléments porteurs (300a, 300b).

10. Unité de pile à combustible selon la revendication 9, **caractérisée en ce que** les au moins deux éléments porteurs (300a, 300b) sont reliés d'un seul tenant l'un à l'autre.

11. Unité de pile à combustible selon la revendication 10, **caractérisée en ce que** les au moins deux éléments porteurs (300a, 300b) sont reliés l'un à l'autre par une zone pliée (314) à l'état monté de l'élément d'appui (200 ; 200").

12. Unité de pile à combustible selon l'une quelconque des revendications 10 ou 11, **caractérisée en ce que** l'élément d'appui (200 ; 200") comporte un premier élément porteur (300a) avec une première languette (302a) et un second élément porteur (300b) avec une seconde languette (302b), la première languette (302a) et la seconde languette (302b) étant contiguës l'une à l'autre.

13. Unité de pile à combustible selon l'une quelconque des revendications 9 à 12, **caractérisée en ce que** les languettes (302) d'au moins deux éléments porteurs (300) reposent les unes sur les autres à l'état monté de l'élément d'appui (200 ; 200").

14. Unité de pile à combustible selon l'une quelconque des revendications 1 à 13, **caractérisée en ce qu'**au moins un élément porteur (300) est réalisé d'un seul tenant avec l'une des parois de boîtier (118, 120).

15. Unité de pile à combustible selon l'une quelconque des revendications 1 à 14, **caractérisée en ce que** l'élément d'appui (200 ; 200") est réalisé comme une partie séparée des parois de boîtier (118, 120).

16. Unité de pile à combustible selon l'une quelconque des revendications 1 à 15, **caractérisée en ce que** l'élément d'appui (200 ; 200") comporte un matériau métallique.

17. Unité de pile à combustible selon l'une quelconque des revendications 1 à 16, **caractérisée en ce qu'**au moins une partie (300) de l'élément d'appui (200 ; 200") est réalisée d'un seul tenant avec la première paroi de boîtier (118).

18. Unité de pile à combustible selon l'une quelconque des revendications 1 à 17, **caractérisée en ce qu'**au moins une partie (300) de l'élément d'appui (200 ; 200") est réalisée d'un seul tenant avec la seconde paroi de boîtier (120).

19. Assemblage d'un empilage de piles à combustible comportant une pluralité d'unités de pile à combustible (114) selon l'une quelconque des revendications 1 à 18, qui se suivent le long d'un sens d'empilage (112).

20. Assemblage d'un empilage de piles à combustible selon la revendication 19, comportant un dispositif de tension, avec lequel les zones présentant les ouvertures de passage de gaz (142, 152, 182, 184) du boîtier (192) des unités de pile à combustible (114) peuvent être calées les unes contre les autres.

21. Assemblage d'un empilage de piles à combustible selon la revendication 20, comportant un autre dispositif de tension, avec lequel d'autres zones du boîtier (192) des unités de pile à combustible (114) peuvent être calées les unes contre les autres indépendamment du calage des zones présentant les ouvertures de passage de gaz (142, 152, 182, 184) des unités de pile à combustible (114).

22. Assemblage d'un empilage de piles à combustible selon la revendication 21, **caractérisé en ce qu'**au moyen de l'autre dispositif de tension (110, 250), des unités d'électrolyte à cathode et anode (114) et des plaques de contact (118) qui se trouvent en contact conducteur avec les unités d'électrolyte à cathode et anode (114), peuvent être tendues les unes contre les autres.
